# EUROPÄISCHE PATENTSCHRIFT

(11) **EP 2 428 421 B1**
(45) Veröffentlichungstag und Bekanntmachung des Hinweises auf die Patenterteilung: **19.07.2017**
(21) Anmeldenummer: 10178094.8
(22) Anmeldetag: 21.09.2010
(51) Int. Cl.: B61D 17/02

(54) **Fahrzeugkomponente mit einer luftüberströmten Ausnehmung**
Vehicle component with a recess covered by a flow of air
Composant de véhicule doté d'un évidement avec un trop-plein d'air

(30) Priorität: 10.09.2010 DE 102010044933; 19.09.2010 DE 102010045632
(43) Veröffentlichungstag der Anmeldung: 14.03.2012
(73) Patentinhaber: Bombardier Transportation GmbH, 10785 Berlin (DE)
(72) Erfinder: Schober, Martin, 14089 Berlin (DE); Orellano, Alexander, 13629 Berlin (DE); Weise, Marco, 10317 Berlin (DE); Tietze, Andreas, 13595 Berlin (DE); Schitthelm, André, 13359 Berlin (DE); Segieth, Christian, 13503 Berlin (DE)
(74) Vertreter: Cohausz & Florack

(56) Entgegenhaltungen:
- EP-A1- 0 057 765

## Beschreibung

Die vorliegende Erfindung betrifft eine Fahrzeugkomponente für ein Fahrzeug, insbesondere ein Schienenfahrzeug für den Hochgeschwindigkeitsverkehr, mit einer ersten Oberfläche und einer zweiten Oberfläche, wobei die erste Oberfläche in einem ersten Betriebsmodus des Fahrzeugs mit einer ersten Fahrtrichtung einer fahrtwindbedingten Luftströmung mit einer lokalen Hauptströmungsrichtung ausgesetzt ist. Die erste Oberfläche bildet im Bereich einer Ausnehmung am Fahrzeug eine Strömungsabrisskante aus, an der sich die Luftströmung bei einer Nennbetriebsgeschwindigkeit des Fahrzeugs von der ersten Oberfläche ablöst, wobei die Ausnehmung durch eine in Richtung der lokalen Hauptströmungsrichtung vorlaufende erste Wand und eine nachlaufende zweite Wand begrenzt ist und die Strömungsabrisskante sich zumindest über einen Großteil einer Querabmessung der Ausnehmung quer zu der lokalen Hauptströmungsrichtung erstreckt. Die zweite Oberfläche grenzt in Richtung der lokalen Hauptströmungsrichtung an die Strömungsabrisskante an und bildet zumindest einen Teil der ersten Wand. Die Erfindung betrifft weiterhin ein Fahrzeug mit einer derartigen Fahrzeugkomponente.

Bei modernen Schienenfahrzeugen mit vergleichsweise hohen Nennbetriebsgeschwindigkeiten besteht in der Regel das Problem, dass es im Bereich von Ausnehmungen oder Querschnittssprüngen an der Außenhülle bzw. Außenhaut des Fahrzeugs zu einer Ablösung der Strömung von den dort angeordneten Fahrzeugkomponenten kommt. Dies führt stromabwärts des Ablösepunktes zur Ausbildung einer sich kontinuierlich aufweitenden turbulenten Scherschicht, welche den Strömungswiderstand des Fahrzeugs erhöht. Am nachlaufenden Ende der Ausnehmung bzw. des Querschnittssprungs trifft die Scherschicht wieder auf die Außenhaut auf, wobei sich dann nach einer bestimmten Lauflänge wieder an der Außenhaut anliegende Strömung mit einer Grenzschicht ausbildet. Ein solches Schienenfahrzeug ist beispielsweise aus dem dem Oberbegriff des Anspruchs 1 entsprechenden Dokument EP 0 057 765 A1 bekannt.

Das Ausmaß der Erhöhung des Strömungswiderstandes durch eine solche temporäre Ablösung der Strömung an solchen Querschnittssprüngen wird unter anderem durch die Aufweitung der Scherschicht quer zur Strömungsrichtung und die Lauflänge bis zum vollständigen Wiederanlegen der Strömung an die Außenhaut des Fahrzeugs ab. Hierbei kommt es insbesondere in Fällen, in denen die Scherschicht am nachlaufenden Ende der Ausnehmung auf eine nachlaufende Wandung der Ausnehmung auftrifft zu einer Erhöhung der Turbulenz in der Scherschicht und damit zu einer Verzögerung des Wiederanlegens der Strömung sowie einer entsprechenden Erhöhung des Strömungswiderstands des Fahrzeugs. Ein weiterer negativer Effekt ist die erhöhte Schallemission zu der es hierbei in diesen Bereichen kommt.

Um die Aufweitung der Scherschicht möglichst gering zu halten, ist es empfehlenswert, am vorlaufenden Ende einer solchen Ausnehmung eine möglichst klar definierte Ablösung der Strömung im Bereich einer entsprechend ausgeprägten Strömungsabrisskante zu erzielen. Wird das Fahrzeug jedoch in beiden Fahrtrichtungen betrieben, wie es der überwiegenden Mehrzahl moderner Schienenfahrzeuge der Fall ist, besteht allerdings der Zielkonflikt, dass der Abschnitt, der beim Betrieb in der einen Fahrtrichtung am vorlaufenden Ende der Ausnehmung die ausgeprägte Strömungsabrisskante bildet, beim Betrieb in der anderen Fahrtrichtung am nachlaufenden Ende der Ausnehmung angeordnet ist und dort beim Aufprall der Scherschicht zu den oben beschriebenen Komplikationen führen kann.

An der Unterseite des Fahrzeugs besteht darüber hinaus das Problem, dass die hoch turbulente Scherschicht den im Gleisbett liegenden Schotter oder andere Objekte aufwirbelt, sodass es zu dem so genannten Schotterflug kommt, durch den es zu Beschädigungen an der Unterseite des Fahrzeugs, der umliegenden Infrastruktur oder schlimmstenfalls sogar zur Gefährdung von Passanten kommen kann.

Das Dokument DE 10 2004 041 090 A1 schlägt im Zusammenhang mit dem Problem des Schotterflugs vor, einen Großteil des Fahrwerksausschnitts sowie der Unterseite des Drehgestells durch Abschirmelemente zu verkleiden. Hierdurch wird zwar zum einen ein Schutz der Fahrwerkskomponenten vor einschlagenden Objekten und zum anderen gegebenenfalls auch eine Verringerung der Lauflänge der Scherschicht erzielt. Allerdings sind derartige Abschirmungen mit vergleichsweise hohem Aufwand verbunden, da sie die notwendige Beweglichkeit zwischen dem Drehgestell und dem Wagenkasten gewährleisten müssen.

Der vorliegenden Erfindung liegt daher die Aufgabe zu Grunde, eine Fahrzeugkomponente um ein Fahrzeug der eingangs genannten Art zur Verfügung zu stellen, welche bzw. welches die oben genannten Nachteile nicht oder zumindest in geringerem Maße mit sich bringt und insbesondere auf einfache Weise beim Betrieb in beiden Fahrtrichtungen einen möglichst geringen Strömungswiderstand und eine möglichst geringe Geräuschemission des Fahrzeugs sowie gegebenenfalls eine Reduktion des Schotterflugrisikos ermöglicht.

Die vorliegende Erfindung löst diese Aufgabe ausgehend von einer Fahrzeugkomponente gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man auf einfache Weise im Zweirichtungsbetrieb einen möglichst geringen Strömungswiderstand und eine möglichst geringe Geräuschemission des Fahrzeugs sowie gegebenenfalls eine Reduktion des Schotterflugrisikos ermöglicht, wenn die zweite Oberfläche nach Art einer Fase um einen spitzen Neigungswinkel zu der lokalen Hauptströmungsrichtung bzw. der ersten Oberfläche geneigt angeordnet ist. Durch diese abgewinkelte Gestaltung der Oberfläche im Nachlauf der Strömungsabrisskante kann zum einen in vorteilhafter Weise eine ausgeprägte scharfe Strömungsabrisskante erzielt werden, welche eine saubere, definierte Ablösung der Strömung von der Oberfläche gewährleistet. Dies ist wiederum im Hinblick auf eine geringe Aufweitung der Scherschicht (in einer Richtung senkrecht zur Haupterstreckungsebene der Scherschicht) und damit einen geringen Strömungswiderstand von Vorteil.

Ein weiterer Vorteil dieser abgewinkelten Gestaltung in liegt darin, dass bei Fahrt in einer umgekehrten zweiten Fahrtrichtung eine dann aus Richtung der zweiten Wand kommende Scherschicht nicht wie bei den herkömmlichen Gestaltungen auf eine im Wesentlichen senkrecht zur Auftreffrichtung ausgerichtete Oberfläche auftrifft, sondern auf die entsprechend weniger stark zur Auftreffrichtung geneigte zweite Oberfläche auftrifft. Dies hat den Vorteil, dass in die auftreffende Scherschicht ein geringerer Impuls eingeleitet wird, sodass sich die Strömung schneller wieder an die Oberfläche anlegen und dort eine widerstandsarme Grenzschicht ausbilden kann.

Je nach Größe des Neigungswinkels zwischen der ersten Oberfläche und der zweiten Oberfläche kann es zwar beim Überströmen der Strömungsabrisskante (welches bei dieser umgekehrten Fahrtrichtung dann in umgekehrter Richtung von der zweiten Oberfläche zur ersten Oberfläche hin erfolgt) zu einer erneuten lokalen bzw. temporären Ablösung (in Form einer so genannten Ablöseblase) kommen, diese fällt jedoch wegen der günstigeren Neigung zwischen ersten und zweiter Oberfläche geringer als bei den herkömmlichen Gestaltungen aus. Mit anderen Worten wird mit der vorliegenden Erfindung der Aufprallwinkel der Scherschicht auf die Oberfläche reduziert, sodass es zu einem sanfteren Aufprall der Scherschicht auf die Oberfläche kommt, der ein schnelles Anlegen der Strömung an die Oberfläche begünstigt und so eine Reduktion des Strömungswiderstands mit sich bringt. Ein weiterer Vorteil dieses sanfteren Aufpralls der Scherschicht auf die Oberfläche liegt in der geringeren Schallemission, die damit einhergeht.

Folglich wird mit der vorliegenden Erfindung in vorteilhafter Weise der oben beschriebene Zielkonflikt hinsichtlich einer aerodynamisch optimierten Gestaltung vor- und nachlaufender Randbereiche einer luftüberströmten Ausnehmung an einem Fahrzeug im Zweirichtungsbetrieb gelöst.

Gemäß einem Aspekt betrifft die vorliegende Erfindung daher eine Fahrzeugkomponente für ein Fahrzeug, insbesondere ein Schienenfahrzeug für den Hochgeschwindigkeitsverkehr, mit einer ersten Oberfläche und einer zweiten Oberfläche, wobei die erste Oberfläche in einem ersten Betriebsmodus des Fahrzeugs mit einer ersten Fahrtrichtung einer fahrtwindbedingten Luftströmung mit einer lokalen Hauptströmungsrichtung ausgesetzt ist. Die erste Oberfläche bildet im Bereich einer Ausnehmung am Fahrzeug eine Strömungsabrisskante aus, an der sich die Luftströmung bei einer Nennbetriebsgeschwindigkeit des Fahrzeugs von der ersten Oberfläche ablöst. Die Ausnehmung ist durch eine in Richtung der lokalen Hauptströmungsrichtung vorlaufende erste Wand und eine nachlaufende zweite Wand begrenzt, wobei sich die Strömungsabrisskante zumindest über einen Großteil einer Querabmessung der Ausnehmung quer zu der lokalen Hauptströmungsrichtung erstreckt. Die zweite Oberfläche grenzt in Richtung der lokalen Hauptströmungsrichtung an die Strömungsabrisskante angrenzt und bildet zumindest einen Teil der ersten Wand bildet. Weiterhin ist die zweite Oberfläche nach Art einer Fase um einen spitzen Neigungswinkel von 10° bis 60° zu der lokalen Hauptströmungsrichtung geneigt angeordnet.

Der Neigungswinkel bestimmt sich bevorzugt in einer Normalebene, die durch die erste Oberfläche und die lokale Hauptströmungsrichtung im jeweiligen Betrachtungsbereich definiert wird. So definiert die erste Oberfläche im Bereich der Strömungsabrisskante eine lokale erste Tangentialebene und eine lokale Flächennormale, während die zweite Oberfläche im Bereich der Strömungsabrisskante eine lokale zweite Tangentialebene definiert. Die lokale Flächennormale definiert dann mit der lokalen Hauptströmungsrichtung eine lokale Normalebene, wobei die lokale zweite Tangentialebene dann in der lokalen Normalebene um den Neigungswinkel zu der lokalen ersten Tangentialebene geneigt ist.

Die Größe des Neigungswinkels zwischen der zweiten Oberfläche und der lokalen Hauptströmungsrichtung bzw. der ersten Oberfläche kann grundsätzlich beliebig groß gewählt sein, solange sichergestellt ist, dass (bei einem Betrieb in der ersten Fahrtrichtung) die zweite Oberfläche im Nachlauf der Strömungsabrisskante derart scharf bzw. kliffartig bezüglich der lokalen Hauptströmungsrichtung (welche durch die erste Oberfläche im grenzschichtnahen Bereich definiert wird) abknickt bzw. abfällt, dass die Luftströmung (zumindest bei der Nennbetriebsgeschwindigkeit des Fahrzeugs) nicht in der Lage ist, dieser rapiden Richtungsänderung der überströmten Oberfläche zu folgen, und sich demgemäß dauerhaft von der Oberfläche ablöst.

Diese rapide Richtungsänderung der Oberfläche entlang der lokalen Hauptströmungsrichtung im grenzschichtnahen Bereich kann auf beliebige geeignete Weise durch eine entsprechende Gestaltung der Außenhaut der Fahrzeugkomponente erzielt werden. Hierbei in ist anzumerken, dass die Außenhaut nicht notwendigerweise in jedem Punkt exakt der lokalen Hauptströmungsrichtung folgen muss. Vielmehr sind lokale Abweichungen der Schnittkontur der Außenhaut von dieser lokalen Hauptströmungsrichtung möglich (die beispielsweise durch Unregelmäßigkeiten der Außenhaut in Form von lokalen Rippen, Kanten oder Dellen etc. bedingt sind), in deren Bereich die Grenzschicht sowie gegebenenfalls der grenzschichtnahe Bereich der Strömung eine von der lokalen Hauptströmungsrichtung abweichende Richtung aufweist. Es muss lediglich gewährleistet sein, dass diese lokalen Abweichungen keine Auswirkung auf die globale Strömungsrichtung der Strömung (mithin also die Hauptströmungsrichtung) im grenzschichtnahen Bereich haben.

Bei bevorzugten Varianten der Erfindung beträgt der Neigungswinkel 30° bis 60°. Besonders vorteilhafte Ergebnisse werden erzielt, wenn der Neigungswinkel 40° bis 50°, insbesondere im Wesentlichen 45° beträgt, da hier ein besonders günstiges Verhältnis zwischen rapider Richtungsänderung der Oberfläche beim Strömungsabriss am vorlaufenden Rand der Ausnehmung und möglichst sanftem Auftreffen der Scherschicht am nachlaufenden Rand der Ausnehmung erzielt wird.

Ein wesentlicher Einflussfaktor für die Längenabmessung der (aus Sicht der Strömung mit einem gegebenen Neigungswinkel bzw. Neigungswinkelverlauf) abknickenden zweiten Oberfläche in der lokalen Hauptströmungsrichtung ist die freie Lauflänge der Scherschicht zwischen dem vorlaufenden ersten Rand und dem nachlaufenden zweiten Rand der Ausnehmung in Richtung der lokalen Hauptströmungsrichtung. Je größer diese freie Lauflänge ist, desto größer ist die Aufweitung der Scherschicht quer zu ihrer Haupterstreckungsebene und desto weiter dringt ein Teil der Scherschicht in die Ausnehmung ein.

Trifft die Scherschicht bei entgegengesetzter Fahrtrichtung auf die zweite Oberfläche auf, so ist deren Längenabmessung bevorzugt so bemessen, dass sich die zweiten Oberfläche bei dem gegebenen Neigungswinkel bzw. Neigungswinkelverlauf so weit in die Ausnehmung hinein erstreckt, dass wenigstens 50%, vorzugsweise wenigstens 70%, weiter vorzugsweise wenigstens 90%, insbesondere im Wesentlichen 100% des in die Ausnehmung eindringenden Teils der Scherschicht auf die zweite Oberfläche auftreffen. Hiermit ist in vorteilhafter Weise sichergestellt, dass ein möglichst großer Teil, vorzugsweise der gesamte in die Ausnehmung einströmende Teil der Scherschicht auf die günstig ausgerichtete zweite Oberfläche auftrifft.

Bei weiteren bevorzugten Ausführungen der erfindungsgemäßen Fahrzeugkomponente kann dies dadurch realisiert sein, dass die Ausnehmung in der lokalen Normalebene zwischen der Strömungsabrisskante und der zweiten Wand eine maximale erste Längenabmessung in der lokalen Hauptströmungsrichtung aufweist und sich die zweite Oberfläche in der lokalen Normalebene in der lokalen Hauptströmungsrichtung über eine zweite Längenabmessung erstreckt, die 1% bis 30% der ersten Längenabmessung beträgt, vorzugsweise 3% bis 15% der ersten Längenabmessung beträgt, weiter vorzugsweise 5% bis 10% der ersten Längenabmessung beträgt.

Es versteht sich hierbei, dass die zweite Längenabmessung hiervon abweichen kann, sofern quer zur lokalen Hauptströmungsrichtung ein Niveauunterschied zwischen dem ersten Rand der Ausnehmung (im Bereich der ersten Wand) und dem zweiten Rand der Ausnehmung (im Bereich der zweiten Wand) besteht. Liegt der zweite Rand auf einem höheren Niveau als der erste Rand, so dringt ein geringerer Anteil der Scherschicht in die Ausnehmung ein, sodass gegebenenfalls eine kürzere zweite Oberfläche ausreicht, um diesen geringeren Anteil gegebenenfalls vollständig aufzufangen. Im umgekehrten Fall (höheres Niveau am ersten Rand) muss eine längere zweite Oberfläche vorgesehen sein, um den gewünschten Effekt zu erzielen.

Bei weiteren bevorzugten Varianten der erfindungsgemäßen Fahrzeugkomponente ist vorgesehen, dass die Ausnehmung in der lokalen Normalebene ausgehend von der Strömungsabrisskante senkrecht zu der lokalen Hauptströmungsrichtung eine maximale erste Tiefenabmessung aufweist und sich die zweite Oberfläche in der lokalen Normalebene ausgehend von der Strömungsabrisskante senkrecht zu der lokalen Hauptströmungsrichtung über eine zweite Tiefenabmessung erstreckt, die 1% bis 40% der ersten Tiefenabmessung beträgt, vorzugsweise 5% bis 30% der ersten Tiefenabmessung beträgt, weiter vorzugsweise 10% bis 20% der ersten Tiefenabmessung beträgt. Auch hiermit lassen sich Konfigurationen erzielen, bei denen zumindest ein Großteil des in die Ausnehmung eindringenden Anteils der Scherschicht durch die zweite Oberfläche in der beschriebenen Weise aufgefangen werden kann.

Die zweite Oberfläche kann grundsätzlich beliebig gestaltet sein, insbesondere eine beliebige Schnittkontur aufweisen, sofern (aus Sicht der Strömung) in der oben beschriebenen Weise eine ausreichend rapide bzw. kliffartige Richtungsänderung realisiert ist, welcher die Strömung hinter der Strömungsabrisskante nicht folgen kann. Hierzu kann die zweite Oberfläche in der lokalen Normalebene zumindest abschnittsweise eine im Wesentlichen geradlinige Schnittkontur aufweisen. Beispielsweise kann ausschließlich eine geradlinige Schnittkontur ebenso vorgesehen sein wie eine in einem oder mehreren Abschnitten polygonale Schnittkontur. Zusätzlich oder alternativ kann die zweite Oberfläche in der lokalen Normalebene zumindest abschnittsweise eine gekrümmte Schnittkontur aufweisen. Hierbei kann die Schnittkontur der zweiten Oberfläche insbesondere konvex ausgebildet sein, um bei einem im Bereich der Strömungsabrisskante vorgegebenen Neigungswinkel über eine vergleichsweise kurze zweite Längenabmessung eine hohe Eindringtiefe in die Ausnehmung zu erzielen.

Die Strömungsabrisskante kann grundsätzlich auf beliebige geeignete Weise gestaltet sein, sofern eine definierte, saubere Ablösung der Strömung realisiert wird. Bevorzugt ist die Strömungsabrisskante scharfkantig ausgeführt, wobei der Krümmungsradius der ersten Oberfläche im Bereich der Strömungsabrisskante in der lokalen Normalebene insbesondere höchstens 20 mm beträgt, vorzugsweise höchstens 10 mm beträgt, weiter vorzugsweise höchstens 5 mm beträgt, weiter vorzugsweise höchstens 2 mm beträgt, da hiermit eine besonders saubere Ablösung der Strömung erzielbar ist.

Wie bereits erwähnt, erstreckt sich die Strömungsabrisskante über einen Großteil der Querabmessung der Ausnehmung. Vorzugsweise erstreckt sich die Strömungsabrisskante daher über wenigstens 50% der Querabmessung der Ausnehmung, vorzugsweise über wenigstens 70% der Querabmessung der Ausnehmung, weiter vorzugsweise über wenigstens 90% der Querabmessung der Ausnehmung, insbesondere über im Wesentlichen 100% der Querabmessung der Ausnehmung. Hiermit können die beschriebenen positiven Effekte möglichst umfassend ausgenutzt werden.

Grundsätzlich kann vorgesehen sein, dass sich die zweite Oberfläche in Richtung der Tiefenabmessung der Ausnehmung (quer zu der Hauptströmungsrichtung) bis auf den Grund der Ausnehmung erstreckt. Erfindungsgemäss schließt an die zweite Oberfläche in der lokalen Hauptströmungsrichtung eine dritte Oberfläche an, wobei die dritte Oberfläche zu der lokalen Hauptströmungsrichtung stärker geneigt ist als die zweite Oberfläche.

Der Übergang zwischen der zweiten und dritten Oberfläche kann grundsätzlich beliebig gestaltet sein. Vorzugsweise weist die dritte Oberfläche jedoch einen sanften, zumindest abschnittsweise gekrümmten und/oder zumindest abschnittsweise geradlinigen Übergang zu der zweiten Oberfläche auf. Dies ist insbesondere dann von Vorteil, wenn nicht der gesamte in die Ausnehmung einströmende Anteil der Scherschicht auf die zweite Oberfläche auftrifft. In diesem Fall gewährleistet dieser Übergang eine entsprechende störungsfreie Weiterleitung des nicht unmittelbar auf die zweite Oberfläche auftreffenden Anteils der Scherschicht. Besonders günstige Strömungsverhältnisse ergeben sich dabei, wenn die dritte Oberfläche einen zumindest abschnittsweise konvexen Übergang zu der zweiten Oberfläche aufweist.

Die Ausnehmung muss quer zu der lokalen Hauptströmungsrichtung nicht notwendigerweise durch eine Wandung verschlossen sein. Bei bestimmten Ausführungsformen der Erfindung ist jedoch eine vierte Oberfläche vorgesehen, welche an die dritte Oberfläche anschließt und eine Begrenzung der Ausnehmung in einer Tiefenrichtung der Ausnehmung bildet.

Die vorstehend beschriebenen Vorteile lassen sich in besonderem Maße bzw. in jedem Betriebszustand erzielen, wenn auch der in den ersten Betriebszustand nachlaufende, zweite Rand der Ausnehmung entsprechend gestaltet ist. Vorzugsweise sind daher im Bereich der zweiten Wand eine fünfte Oberfläche und einer sechste Oberfläche vorgesehen, wobei die fünfte Oberfläche derart ausgebildet ist, dass sie in einem zweiten Betriebsmodus des Fahrzeugs mit einer zur ersten Fahrtrichtung entgegengesetzten zweiten Fahrtrichtung hinsichtlich Gestaltung und Funktion der ersten Oberfläche entspricht, und die sechste Oberfläche derart ausgebildet ist, dass sie in dem zweiten Betriebsmodus hinsichtlich Gestaltung und Funktion der zweiten Oberfläche entspricht.

Mit anderen Worten weist in diesem Fall die fünfte Oberfläche die oben beschriebenen Merkmale der ersten Oberfläche auf, während die sechste Oberfläche die oben beschriebenen Merkmale der zweiten Oberfläche aufweist, sodass insoweit zunächst lediglich auf die obigen Ausführungen verwiesen wird.

Vorzugsweise ist der Neigungswinkel zwischen der ersten Oberfläche und der zweiten Oberfläche ein erster Neigungswinkel und die sechste Oberfläche ist wiederum nach Art einer Fase um einen spitzen zweiten Neigungswinkel zu der fünften Oberfläche geneigt angeordnet. Auch hier kann der zweite Neigungswinkel insbesondere 10° bis 80°, vorzugsweise 30° bis 60°, weiter vorzugsweise 40° bis 50°, insbesondere im Wesentlichen 45° betragen, um die oben beschriebenen Vorteile zu erzielen.

Grundsätzlich kann vorgesehen sein, dass die fünfte und sechste Oberfläche gleichartig zu der ersten und zweiten Oberfläche, insbesondere symmetrisch zu der ersten und zweiten Oberfläche gestaltet sind. Bei bevorzugten Varianten der Erfindung ist jedoch asymmetrische Gestaltung vorgesehen, wobei der zweite Neigungswinkel insbesondere kleiner ist als der erste Neigungswinkel. Insbesondere kann die vorgesehen sein, dass der zweite Neigungswinkel vorzugsweise um 5° bis 55°, weiter vorzugsweise um 10° bis 35°, weiter vorzugsweise um 15° bis 20°, kleiner ist als der erste Neigungswinkel.

Dies kann insbesondere dann sinnvoll sein, wenn die Fahrzeugkomponente nahe an einem Ende eines vergleichsweise langen Fahrzeugs vorgesehen ist. Bildet dieses Ende in dem ersten Betriebsmodus mit der ersten Fahrtrichtung das vorlaufende Ende des Fahrzeugs, so ist in diesem Fall ist die saubere Ablösung der Strömung am vorlaufenden ersten Rand der Ausnehmung im Hinblick auf einen geringen Strömungswiderstand sowie eine geringe Geräuschemission ebenso von besonderer Bedeutung wie ein sanftes und schnelles Wiederanlegen der Strömung am nachlaufenden zweiten Rand der Ausnehmung, sodass im Bereich des zweiten Randes ein möglichst geringer zweiter Neigungswinkel von Vorteil ist. In dem zweiten Betriebsmodus mit umgekehrter Fahrtrichtung befindet sich die Ausnehmung dann am nachlaufenden Ende des Fahrzeugs, wo sich aufgrund der Länge des Fahrzeugs bereits eine vergleichsweise breite Grenzschicht um das Fahrzeug ausgebildet hat, welche die oben beschriebenen Probleme bei der Überströmung einer solchen Ausnehmung reduziert, sodass insbesondere die steilere Gestaltung der zweiten Oberfläche beim Aufprall der Strömung eine geringere Rolle spielt.

Bei der Fahrzeugkomponente kann es sich grundsätzlich um eine beliebige Komponente des Fahrzeugs handeln, in deren Bereich eine entsprechende zu überströmende Ausnehmung vorgesehen ist. So kann es sich beispielsweise bei der Ausnehmung um einen Fahrwerksausschnitt eines Wagenkastens des Fahrzeugs handeln.

Alternativ kann es sich bei der die Ausnehmung um eine Griffmulde in einer Seitenwandung eines Wagenkastens des Fahrzeugs handeln, wobei in der Griffmulde insbesondere eine Handstange in einer versenkten Anordnung vorgesehen ist. Diese Handstange ist bevorzugt dann soweit in die Ausnehmung versenkt angeordnet, dass sie nicht mit der Scherschicht interferiert.

Alternativ kann es sich bei der Ausnehmung um eine Vertiefung in einem Dachbereich eines Wagenkastens des Fahrzeugs handeln. Beispielsweise kann die Vertiefung zur Aufnahme einer Komponente einer Stromversorgungseinrichtung des Fahrzeugs, insbesondere eines Stromabnehmers, vorgesehen sein.

Ebenso kann es sich bei der Ausnehmung um einen Einschnitt in einer Außenhaut des Fahrzeugs an einem Übergang zwischen zwei Wagenkästen des Fahrzeugs handeln. Hierbei ist es insbesondere möglich, dass die erste Oberfläche und die zweite Oberfläche an einem in einer Fahrzeuglängsrichtung weisenden Vorsprung eines Wagenkastens ausgebildet sind. Dies ermöglicht beispielsweise eine einfache Nachrüstung dieser Vorsprünge an bereits bestehenden Fahrzeugen.

Bei weiteren Varianten der Erfindung handelt sich bei der Ausnehmung um eine Lücke zwischen zwei Anbauelementen, insbesondere zwei Dachcontainern oder zwei Unterflurcontainern, an wenigstens einem Wagenkasten des Fahrzeugs handeln. Ebenso kann es sich bei der Ausnehmung um eine Lücke zwischen einem Wagenkasten des Fahrzeugs und einem Fahrwerk des Fahrzeugs handeln.

Schließlich kann die vorliegende Erfindung auch an ein Fahrwerk des Fahrzeugs zum Einsatz kommen. Vorzugsweise handelt es sich bei der Fahrzeugkomponente dann um ein Fahrwerk des Fahrzeugs.

Die vorliegende Erfindung betrifft weiterhin ein Fahrzeug mit einer erfindungsgemäßen Fahrzeugkomponente. Dabei handelt es sich bevorzugt um ein Fahrzeug für den Hochgeschwindigkeitsverkehr mit einer Nennbetriebsgeschwindigkeit oberhalb von 250 km/h, insbesondere oberhalb von 300 km/h, insbesondere von 320 km/h bis 390 km/h, da hier die Vorteile der Erfindung besonders gut zum Tragen kommen.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:
- Figur 1: eine schematische perspektivische Ansicht eines Teils eines Fahrzeugs mit einer Fahrzeugkomponente, die nicht Teil der Erfindung ist;
- Figur 2: eine schematische Seitenansicht des Fahrzeugs aus Figur 1;
- Figur 3: eine schematische Schnittansicht eines Teils des Fahrzeugs im Bereich der Fahrzeugspitze entlang Linie III-III aus Figur 1;
- Figur 4: eine schematische Ansicht eines Teils einer ersten bevorzugten Ausführungsform der erfindungsgemäßen Fahrzeugkomponente;
- Figur 5: eine schematische Ansicht eines Teils einer zweiten bevorzugten Ausführungsform der erfindungsgemäßen Fahrzeugkomponente;
- Figur 6: eine schematische Ansicht eines Teils einer dritten bevorzugten Ausführungsform der erfindungsgemäßen Fahrzeugkomponente;
- Figur 7: eine schematische Ansicht eines Teils einer vierten bevorzugten Ausführungsform der erfindungsgemäßen Fahrzeugkomponente.

### Erstes Ausführungsbeispiel

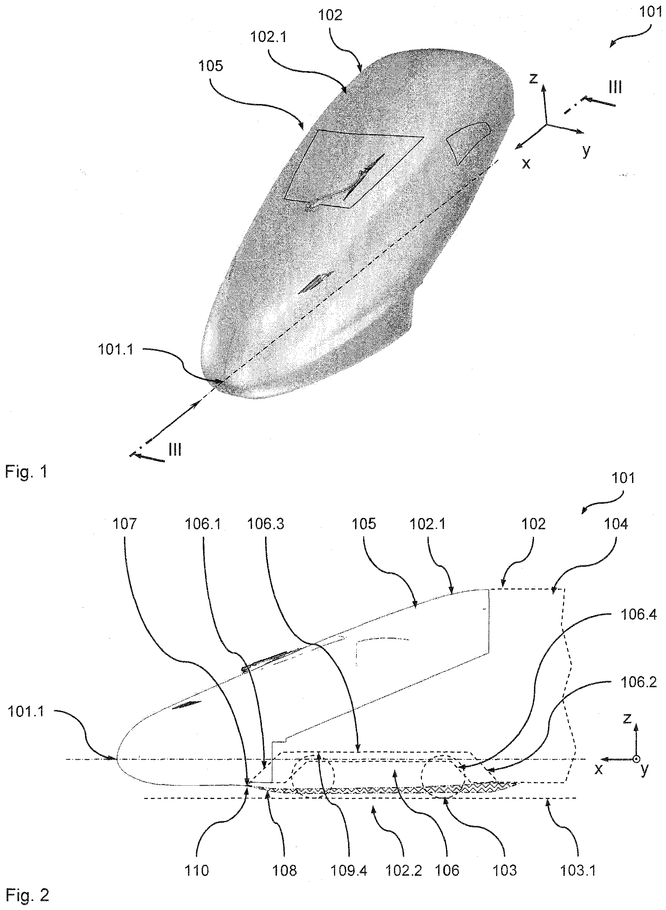

Im Folgenden wird unter Bezugnahme auf die Figuren 1 bis 4 ein Fahrzeug in Form eines Schienenfahrzeugs 101 beschrieben. Bei dem Schienenfahrzeug 101 handelt es sich um einen Endwagen eines Triebzugs für den Hochgeschwindigkeitsverkehr, dessen Nennbetriebsgeschwindigkeit oberhalb von 250 km/h, nämlich bei vₙ = 380 km/h, liegt.

Es sei an dieser Stelle angemerkt, dass die nachfolgenden Ausführungen für einen Strömungszustand bei Fahrt des Fahrzeugs 101 mit konstanter Geschwindigkeit im geraden ebenen Gleis ohne die Einflüsse von Seitenwind oder dergleichen gemacht werden, sofern keine expliziten anderweitigen Angaben gemacht werden. Es versteht sich, dass sich bei einer Abweichung von diesem Betriebszustand (beispielsweise infolge einer Kurvenfahrt oder von Seitenwind etc.) Abweichungen von den beschriebenen Strömungsverhältnissen, insbesondere den Strömungsrichtungen ergeben können, wobei jedoch die grundsätzlichen Feststellungen im Wesentlichen weiterhin gelten.

Das Fahrzeug 101 umfasst einen Wagenkasten 102, der eine Außenhaut 102.1 des Fahrzeugs 101 definiert. Der Wagenkasten 102 ist im Bereich seiner beiden Enden in herkömmlicher Weise jeweils auf einem Fahrwerk in Form eines Drehgestells 103 abgestützt ist. Es versteht sich jedoch, dass die vorliegende Erfindung auch in Verbindung mit anderen Konfigurationen eingesetzt werden kann, bei denen der Wagenkasten lediglich auf einem Fahrwerk abgestützt ist.

Zum einfacheren Verständnis der nachfolgenden Erläuterungen ist in den Figuren ein (durch die Radaufstandsebene 103.1 des Drehgestells 103 vorgegebenes) Fahrzeug-Koordinatensystem x,y,z angegeben, in dem die x-Koordinate die Längsrichtung des Schienenfahrzeugs 101, die y-Koordinate die Querrichtung des Schienenfahrzeugs 101 und die z-Koordinate die Höhenrichtung des Schienenfahrzeugs 101 bezeichnen.

Der Wagenkasten 102 weist einen Rumpfabschnitt 104 und einen daran anschließenden Kopfabschnitt 105 auf, der ein bevorzugtes Ausführungsbeispiel der erfindungsgemäßen Fahrzeugkomponente darstellt. In einem ersten Betriebsmodus mit einer ersten Fahrtrichtung bildet der Kopfabschnitt 105 das vorlaufende Ende des Zuges 101, während er in einem zweiten Betriebsmodus mit einer zur ersten Fahrtrichtung entgegengesetzten zweiten Fahrtrichtung das nachlaufende Ende des Zuges 101 bildet.

Der Rumpfabschnitt 104 weist (abgesehen von lokalen Ausnehmungen für funktionale Komponenten des Fahrzeugs, wie beispielsweise Stromabnehmer, Dachcontainer etc.) eine im Wesentlichen prismatische Gestaltung (mit entlang der Fahrzeuglängsrichtung im Wesentlichen identischen Schnittkonturen der Außenhaut 102.1) auf.

Demgegenüber verjüngt sich der Kopfabschnitt 105 sowohl in Fahrzeughöhenrichtung als auch in Fahrzeugquerrichtung zum Ende des Fahrzeugs 101 hin, sodass er im Betrieb des Fahrzeugs 101 ein freies Fahrzeugende des Fahrzeugs 101 bilden kann. Dabei ist in dem Kopfabschnitt 105 ein Abteil für den Fahrzeugführer vorgesehen, von dem aus der Fahrzeugführer das Fahrzeug 101 steuert, wenn der Kopfabschnitt 105 in einem Normalbetrieb des Fahrzeugs 101 das vorlaufende Ende 101.1 des Fahrzeugs 101 bildet (also die Fahrtrichtung in Richtung der positiven x-Achse weist, wovon im Folgenden ausgegangen wird, soweit keine expliziten anderweitigen Angaben gemacht werden).

Das Drehgestell 103 ist in einer Ausnehmung in Form eines Fahrwerksausschnitts 106 des Wagenkastens 102 angeordnet, der in dem ersten Betriebsmodus an seinem vorlaufenden Ende durch eine vorlaufende Wand 106.1 und an seinem nachlaufenden Ende durch eine nachlaufende Wand 106.2 begrenzt ist, die durch eine obere Wand 106.3 miteinander verbunden sind. Zu beiden Fahrwerksseiten wird der Fahrwerksausschnitt 106 durch Schürzen 106.4 begrenzt.

Am unteren Ende der vorlaufenden Wand 106.1 bildet die Außenhaut 102.1 des Wagenkastens 102 in dem ersten Betriebsmodus einen Ablösebereich in Form einer ersten Strömungsabrisskante 107 aus, an der sich der (die Unterseite 102.2 des Wagenkastens 102 vom freien Fahrzeugende zum Fahrwerksausschnitt 106 hin überstreichende) Luftstrom bei der Nennbetriebsgeschwindigkeit des Fahrzeugs 101 (aber auch bei darunter liegenden Fahrgeschwindigkeiten) von der Außenhaut 102.1, also der Oberfläche des Wagenkastens 102, unter Ausbildung einer Scherschicht 108 ablöst.

In dem ersten Betriebsmodus ist eine der Strömungsabrisskante 107 vorlaufende erste Oberfläche 109.1 der Außenhaut 102.1 einer fahrtwindbedingten Luftströmung mit einer ersten lokalen Hauptströmungsrichtung 111 ausgesetzt. Die erste Oberfläche 109.1 bildet die Strömungsabrisskante 107 aus, an welche eine zweite Oberfläche 109.2 der ersten Wandung 106.1 angrenzt.

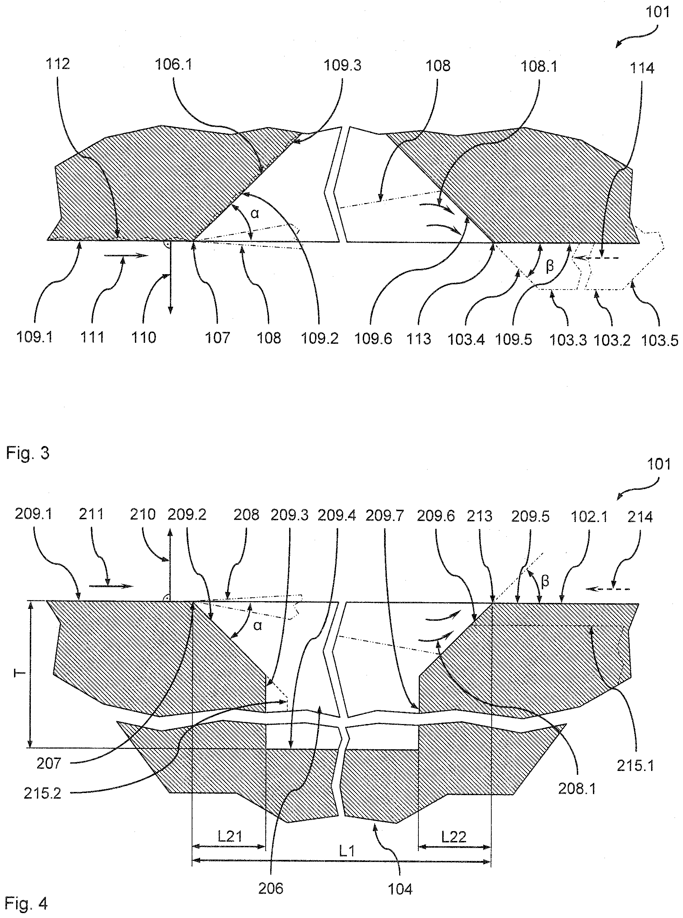

Um eine saubere, definierte Ablösung der Strömung an der Strömungsabrisskante 107 zu erzielen, ist die zweite Oberfläche 109.2 nach Art einer Fase um einen spitzen ersten Neigungswinkel α zu der lokalen Hauptströmungsrichtung 111 geneigt angeordnet. Der Neigungswinkel bestimmt sich hierbei in einer Normalebene, die durch die erste Oberfläche 109.1 und die lokale Hauptströmungsrichtung 111 im jeweiligen Betrachtungsbereich definiert wird. So definiert im vorliegenden Beispiel die erste Oberfläche 109.1 im Bereich der Strömungsabrisskante 107 eine lokale erste Tangentialebene (die in Figur 3 senkrecht zur Zeichnungsebene verläuft und mit der zur dort geradlinig verlaufenden ersten Oberfläche 109.1 zusammenfällt) und eine lokale Flächennormale 110 (die senkrecht zu der lokalen erste Tangentialebene verläuft). Diese lokale Flächennormale 110 definiert ihrerseits mit der lokalen Hauptströmungsrichtung 111 die besagte lokale Normalebene (die in Figur 3 der Schnitt- bzw. Zeichnungsebene entspricht).

Die zweite Oberfläche 109.2 definiert ihrerseits eine lokale zweite Tangentialebene (die in Figur 3 ebenfalls senkrecht zur Zeichnungsebene verläuft und mit der dort geradlinig verlaufenden zweiten Oberfläche 109.2 zusammenfällt). Diese lokale zweite Tangentialebene ist in der lokalen Normalebene um den ersten Neigungswinkel α zu der lokalen ersten Tangentialebene geneigt.

Die Größe des Neigungswinkels α zwischen der zweiten Oberfläche 109.2 und der lokalen Hauptströmungsrichtung 111 bzw. der ersten Oberfläche 109.1 kann grundsätzlich beliebig groß gewählt sein, solange sichergestellt ist, dass (bei einem Betrieb in der ersten Fahrtrichtung) die zweite Oberfläche 109.2 im Nachlauf der Strömungsabrisskante 107 derart scharf bzw. kliffartig bezüglich der lokalen Hauptströmungsrichtung 111 (welche durch die erste Oberfläche 109.1 im grenzschichtnahen Bereich definiert wird) abknickt bzw. abfällt, dass die Luftströmung (zumindest bei der Nennbetriebsgeschwindigkeit des Fahrzeugs) nicht in der Lage ist, dieser rapiden Richtungsänderung der überströmten Oberfläche 102.1 zu folgen, und sich demgemäß dauerhaft von der Oberfläche 102.1 ablöst.

Diese rapide Richtungsänderung der Oberfläche 102.1 entlang der lokalen Hauptströmungsrichtung 111 im grenzschichtnahen Bereich kann auf beliebige geeignete Weise durch eine entsprechende Gestaltung der Außenhaut 102.1 erzielt werden. Hierbei in ist anzumerken, dass die Außenhaut 102.1 nicht notwendigerweise in jedem Punkt exakt der lokalen Hauptströmungsrichtung 111 folgen muss. Vielmehr sind lokale Abweichungen der Schnittkontur der Außenhaut 102.1 von dieser lokalen Hauptströmungsrichtung 111 möglich (die beispielsweise durch Unregelmäßigkeiten der Außenhaut in Form von lokalen Rippen, Kanten oder Dellen etc. bedingt sind und in Figur 3 durch die gestrichelte Kontur 112 angedeutet sind), in deren Bereich die Grenzschicht sowie gegebenenfalls der grenzschichtnahe Bereich der Strömung eine von der lokalen Hauptströmungsrichtung 111 abweichende Richtung aufweist. Es muss lediglich gewährleistet sein, dass diese lokalen Abweichungen keine Auswirkung auf die lokale Strömungsrichtung 111 der Strömung insgesamt (mithin also die Hauptströmungsrichtung) im grenzschichtnahen Bereich haben.

Im vorliegenden Beispiel beträgt der erste Neigungswinkel α = 45°, da hiermit im Nachlauf der Strömungsabrisskante 107 ein ausreichend scharfes bzw. kliffartiges Abfallen bzw. Abknicken der überströmten Oberfläche 102.1 bezüglich der lokalen Hauptströmungsrichtung 111 erzielt wird, sodass die Strömung nicht in der Lage ist, dieser rapiden Richtungsänderung der überströmten Oberfläche 102.1 zu folgen, und demgemäß ein sauberer Strömungsabriss erfolgt, der eine geringe Aufweitung der Scherschicht in der (in Figur 3 dargestellten) Normalebene und die damit einhergehenden Vorteile hinsichtlich des geringen Strömungswiderstandes bewirkt.

In der lokalen Hauptströmungsrichtung 111 grenzt an die zweite Oberfläche 109.2 eine dritte Oberfläche 109.3 der vorlaufenden Wand 106.1 an. Diese dritte Oberfläche 109.3 weist im vorliegenden Beispiel dieselbe Neigung zur Hauptströmungsrichtung 111 auf. Es versteht sich jedoch, dass bei anderen Varianten der Erfindung auch eine abweichende Neigung vorgesehen sein kann. Die dritte Oberfläche 109.3 geht in eine vierte Oberfläche 109.4 über, welche von der oberen, dritten Wandung 106.3 des Fahrwerksausschnitts 106 gebildet ist.

Am nachlaufenden Ende des Fahrwerksausschnitts 106 bildet die Außenhaut 102.1 eine fünfte Oberfläche 109.5 und eine sechste Oberfläche 109.6 aus. Wie insbesondere der Figur 3 zu entnehmen ist, sind die fünfte Oberfläche 109.5 und die sechste Oberfläche 109.6 (bezüglich einer zur Hauptströmungsrichtung 111 bzw. 114 senkrechten Symmetrieebene) symmetrisch zu der ersten Oberfläche 109.1 bzw. der zweiten Oberfläche 109.2 angeordnet.

Diese Gestaltung der fünften Oberfläche 109.5 und der sechsten Oberfläche 109.6 bewirkt, dass bei einer Fahrtrichtungsumkehr, also in dem zweiten Betriebsmodus des Fahrzeugs 101, die fünfte Oberfläche 109.5 die Rolle bzw. Funktion der ersten Oberfläche 109.1 übernimmt, während die sechste Oberfläche 109.6 die Rolle bzw. Funktion der zweiten Oberfläche 109.2 übernimmt, sodass insoweit zunächst auf die obigen Ausführungen zur ersten und zweiten Oberfläche 109.1, 109.2 verwiesen wird.

Im Detail ist die sechste Oberfläche 109.6 ebenfalls nach Art einer Fase in der Normalebene um einen spitzen zweiten Neigungswinkel β = α = 45° zu einer zweiten lokalen Hauptströmungsrichtung 114 geneigt angeordnet.

Die Größe des zweiten Neigungswinkels β zwischen der sechsten Oberfläche 109.6 und der lokalen Hauptströmungsrichtung 111 bzw. der fünften Oberfläche 109.5 kann auch hier grundsätzlich beliebig groß gewählt sein, solange sichergestellt ist, dass bei einem Betrieb in der zweiten Fahrtrichtung die sechste Oberfläche 109.6 im Nachlauf der (am Übergang der fünften Oberfläche 109.5 zu der sechsten Oberfläche 109.6 gebildeten) zweiten Strömungsabrisskante 113 derart scharf bzw. kliffartig bezüglich der lokalen Hauptströmungsrichtung 114 abknickt bzw. abfällt, dass die Luftströmung (zumindest bei der Nennbetriebsgeschwindigkeit des Fahrzeugs) nicht in der Lage ist, dieser rapiden Richtungsänderung der überströmten Oberfläche 102.1 zu folgen, und sich demgemäß dauerhaft von der Oberfläche 102.1 ablöst.

Ein besonderer Vorteil dieser Gestaltung mit der in der jeweiligen lokalen Hauptströmungsrichtung 111 bzw. 114 an die Strömungsabrisskante 107 bzw. 113 anschließenden und nach Art einer Fase abknickenden Oberfläche 109.2 bzw. 109.6 liegt in der Tatsache, dass in dem jeweiligen Betriebsmodus, in dem die Oberfläche 109.2 bzw. 109.6 am nachlaufenden Ende des Fahrwerksausschnitts 106 liegt, die Scherschicht 108 nicht wie bei den herkömmlichen Gestaltungen auf eine im Wesentlichen senkrecht zur Auftreffrichtung ausgerichtete Oberfläche auftrifft, sondern auf die entsprechend weniger stark zur Auftreffrichtung geneigte zweite Oberfläche 109.2 bzw. sechste Oberfläche 109.6 auftrifft, wie dies in Figur 3 durch die Pfeile 108.1 angedeutet ist. Dies hat den Vorteil, dass in die auftreffende Scherschicht 108 ein geringerer Impuls eingeleitet wird, sodass sich die Strömung schneller wieder an die Oberfläche 102.1 anlegen und dort eine widerstandsarme Grenzschicht ausbilden kann.

Je nach Größe des Neigungswinkels α zwischen der ersten Oberfläche 109.1 und der zweiten Oberfläche 109.2 bzw. des Neigungswinkels β zwischen der fünften Oberfläche 109.5 und der sechsten Oberfläche 109.6 kann es zwar beim Überströmen der Strömungsabrisskante 107 bzw. 113 zu einer erneuten lokalen bzw. temporären Ablösung (in Form einer so genannten Ablöseblase) kommen, diese fällt jedoch wegen der günstigeren Neigung zwischen der ersten Oberfläche 109.1 und der zweiten Oberfläche 109.2 bzw. Der fünften Oberfläche 109.5 und der sechsten Oberfläche 109.6 geringer als bei den herkömmlichen Gestaltungen aus.

Mit anderen Worten wird mit der vorliegenden Erfindung der Aufprallwinkel der Scherschicht 108 auf die Oberfläche 102.1 reduziert, sodass es zu einem sanfteren Aufprall der Scherschicht 108 auf die Oberfläche 102.1 kommt, der ein schnelles Anlegen der Strömung an die Oberfläche 102.1 begünstigt und so eine Reduktion des Strömungswiderstands mit sich bringt. Ein weiterer Vorteil dieses sanfteren Aufpralls der Scherschicht 108 auf die Oberfläche 102.1 liegt in der geringeren Schallemission, die hiermit einhergeht.

Folglich wird mit der vorliegenden Erfindung in vorteilhafter Weise der oben beschriebene Zielkonflikt hinsichtlich einer aerodynamisch optimierten Gestaltung vor- und nachlaufender Randbereiche einer luftüberströmten Ausnehmung an einem Fahrzeug im Zweirichtungsbetrieb gelöst.

Mit dem im vorliegenden Beispiel gewählten Neigungswinkel β = α = 45° wird in beiden Betriebsmodi ein besonders günstiges Verhältnis zwischen rapider Richtungsänderung der Oberfläche 102.1 beim Strömungsabriss am jeweils vorlaufenden Rand 107 bzw. 113 des Fahrwerksausschnitts 106 und möglichst sanftem Auftreffen der Scherschicht 108 am nachlaufenden Rand 113 bzw. 107 des Fahrwerksausschnitts 106 erzielt. Es versteht sich jedoch, dass bei anderen Varianten der Erfindung auch andere Neigungswinkel gewählt werden können, wie die nachfolgend noch im Zusammenhang mit dem weiteren Ausführungsbeispielen beschrieben wird.

Die Strömungsabrisskanten 107 und 113 sind im vorliegenden Beispiel im Wesentlichen geradlinig ausgebildet. Es versteht sich jedoch, dass die Strömungsabrisskante bei anderen Varianten der Erfindung einen beliebigen geeigneten Verlauf (z. B. einen zumindest abschnittsweise geradlinigen Verlauf und/oder einen zumindest abschnittsweise gekrümmten Verlauf) aufweisen kann.

Weiterhin erstrecken sich die Strömungsabrisskanten 107 und 113 im vorliegenden Beispiel über etwa 80% der Querabmessung des Fahrwerksausschnitts 106 senkrecht zur Normalebene, um die beschriebene vorteilhafte Beeinflussung der Strömung über einen möglichst großen Bereich zu erzielen.

Die Strömungsabrisskante 107 und 113 selbst kann grundsätzlich auf beliebige geeignete Weise gestaltet sein, sofern eine definierte, saubere Ablösung der Strömung realisiert wird. Im vorliegenden Beispiel ist die Strömungsabrisskante scharfkantig ausgeführt, wobei der Krümmungsradius der ersten Oberfläche 109.1 bzw. der fünften Oberfläche 109.5 in der lokalen Normalebene im vorliegenden Beispiel etwa 5 mm beträgt, da hiermit eine besonders saubere Ablösung der Strömung erzielbar ist.

Bei einem weiteren Ausführungsbeispiel der Erfindung, wie es in Figur 3 durch die strichpunktierte Kontur 103.2 angedeutet ist, sind die fünfte Oberfläche 103.3 und sechste Oberfläche 103.4 an einem in dem ersten Betriebsmodus vorlaufenden Abschnitt eines Fahrmotors 103.2 des Drehgestells 103 angeordnet.

Dieser Fahrmotor 103.2 kann, wie in Figur 3 dargestellt, zu dem Wagenkasten 102 quer zu der Hauptströmungsrichtung 111 nach unten versetzt angeordnet sein. Es versteht sich jedoch, dass bei anderen Varianten der Erfindung die erste Oberfläche 109.1 und die an dem Fahrmotor 103.2 angeordnete fünfte Oberfläche 103.3 sich im Wesentlichen auf demselben Niveau befinden oder in der entgegengesetzten Richtung versetzt angeordnet sein können. Wie der Figur 3 weiterhin zu entnehmen ist, bildet an einem in dem ersten Betriebsmodus nachlaufenden Abschnitt des Fahrmotors 103.2 die fünfte Oberfläche 103.3 eine weitere erste Oberfläche aus (die in Gestaltung und Funktion der ersten Oberfläche 109.1 entspricht), während im Anschluss daran eine weitere zweite Oberfläche 103.5 an dem Fahrmotor 103.2 angeordnet ist (die in Gestaltung und Funktion der zweiten Oberfläche 109.2 entspricht).

### Zweites Ausführungsbeispiel

Eine erste vorteilhafte Ausführung der erfindungsgemäßen Fahrzeugkomponente 104 wird im Folgenden unter Bezugnahme auf die Figuren 1, 2 und 4 beschrieben. Die Fahrzeugkomponente entspricht dabei in ihrer grundsätzlichen Gestaltung und Funktionsweise der Fahrzeugkomponente aus den Figuren 1 bis 3, sodass hier lediglich auf die Unterschiede eingegangen werden soll. Insbesondere sind gleichartige Komponenten mit um den Wert 100 erhöhten Bezugszeichen versehen. Sofern nachfolgend nichts Anderweitiges ausgeführt wird, wird hinsichtlich der Merkmale, Funktionen und Vorteile dieser Komponenten auf die obigen Ausführungen im Zusammenhang mit dem ersten Ausführungsbeispiel verwiesen.

Die Figur 4 zeigt einen Schnitt durch den Rumpfabschnitt 104, welcher die erfindungsgemäße Fahrzeugkomponente darstellt, im Bereich einer Ausnehmung für einen Stromabnehmer (nicht dargestellt) im Dachbereich des Fahrzeugs 101. Der Unterschied zu der Ausführung aus den Figuren 1 bis 3 besteht darin, dass die an die zweite Oberfläche 209.2 angrenzende dritte Oberfläche 209.3 sowie eine an die sechste Oberfläche 209.6 angrenzende siebte Oberfläche 209.7 jeweils um einen Winkel von 90° zur lokalen Hauptströmungsrichtung 211 bzw. 214 geneigt sind.

Diese Gestaltung mit den steiler geneigten Abschnitten 209.3 und 209.7 hat den Vorteil, dass sie im Fahrzeuglängsrichtung Platz sparender ist, da bei vorgegebenen Abmessungen des Stromabnehmers die Strömungsabrisskanten 207 bzw. 213 näher beieinander liegen können, mithin also die gesamte Ausnehmung 206 in Fahrzeuglängsrichtung kürzer ausgeführt werden kann.

Um bei dieser Gestaltung die oben beschriebenen Vorteile hinsichtlich des sanfteren Auftreffens der Scherschicht 208 auf die im jeweiligen Betriebsmodus nachlaufende Oberfläche 209.6 bzw. 209.2 zu erzielen, ist die jeweilige (zweite) Längenabmessung L21 bzw. L22 der zweiten Oberfläche in der lokalen Hauptströmungsrichtung 211 bzw. 214 an die freie Lauflänge L1 der Scherschicht zwischen dem ersten Rand 207 und dem zweiten Rand 213 der Ausnehmung 206 (also die maximale erste Längenabmessung L1 der Ausnehmung 206) angepasst, dass 100% des in die Ausnehmung 206 eindringenden Teils der Scherschicht 208 in dem jeweiligen Betriebsmodus auf die sechste Oberfläche 209.6 bzw. die zweite Oberfläche 209.2 auftreffen. Hiermit ist in vorteilhafter Weise sichergestellt, dass der gesamte in die Ausnehmung einströmende Teil der Scherschicht 208 auf die günstig ausgerichtete zweite Oberfläche auftrifft.

Im vorliegenden Beispiel beträgt die jeweilige zweite Längenabmessung L21 bzw. L22 jeweils etwa 5% der ersten Längenabmessung L1. Es versteht sich jedoch, dass bei anderen Varianten der Erfindung auch ein anderes Längenverhältnis der jeweiligen zweiten Längenabmessung L21 bzw. L22 zur ersten Längenabmessung L1 vorgesehen sein kann. Besonders vorteilhafte Gestaltungen ergeben sich mit den eingangs erwähnten Längenverhältnissen.

Es sei an dieser Stelle angemerkt, dass das Längenverhältnis insbesondere bei Gestaltungen, bei denen in der Ausnehmung weitere Komponenten wie Drehgestelle etc. angeordnet sind, an denen es gegebenenfalls sogar mehrfach zu einem Wechsel aus Wiederanlegen und erneutem Ablösen der Strömung kommt, bei großen ersten Längenabmessungen L1 in der Regel abnimmt, da die auf den nachlaufenden Rand auftreffende Scherschicht dann in der Regel nur begrenzt aufgeweitet ist, sodass eine im Verhältnis zur ersten Längenabmessung L1 kürzere zweite bzw. sechste Oberfläche ausreicht, um die Scherschicht sanft aufzufangen.

Es versteht sich hierbei, dass die zweite Längenabmessung L21 bzw. L22 von der beschriebenen Gestaltung abweichen kann, sofern quer zur lokalen Hauptströmungsrichtung ein Niveauunterschied zwischen dem ersten Rand der Ausnehmung (im Bereich der ersten Wand) und dem zweiten Rand der Ausnehmung (im Bereich der zweiten Wand) besteht, wie dies in Figur 4 durch die gestrichelten Konturen 215.1 und 215.2 angedeutet ist. Liegt der vorlaufende Rand auf einem höheren Niveau als der nachlaufende Rand, so dringt ein geringerer Anteil der Scherschicht 208 in die Ausnehmung ein, sodass gegebenenfalls eine kürzere (sechste) Oberfläche (siehe Kontur 215.1) ausreicht, um diesen geringeren Anteil gegebenenfalls vollständig aufzufangen. In der umgekehrten Fahrtrichtung muss gegebenenfalls eine längere (zweite) Oberfläche (siehe Kontur 215.2) vorgesehen sein, um den gewünschten Effekt zu erzielen.

Weiterhin weist die Ausnehmung 206 in der lokalen Normalebene ausgehend von der Strömungsabrisskante 207 senkrecht zu der lokalen Hauptströmungsrichtung 211 eine maximale erste Tiefenabmessung T auf, während sich die zweite Oberfläche 209.2 in der lokalen Normalebene ausgehend von der Strömungsabrisskante 207 senkrecht zu der lokalen Hauptströmungsrichtung 211 über eine zweite Tiefenabmessung erstreckt, die 1% der ersten Tiefenabmessung T beträgt.

Es versteht sich jedoch, dass bei anderen Varianten der Erfindung auch ein hiervon abweichendes Verhältnis der zweiten Tiefenabmessung zur ersten Tiefenabmessung T vorgesehen sein kann. Besonders vorteilhafte Gestaltungen ergeben sich mit den eingangs erwähnten Tiefenverhältnissen.

Bei weiteren Varianten der Erfindung kann es sich bei der Ausnehmung 206 auch um eine Lücke zwischen zwei an dem Fahrzeug 101 angeordneten separaten Komponenten, wie beispielsweise Dach- oder Unterflurcontainern, handeln. Die Strömungsabrisskante 207 ist dann an dem einen Container ausgebildet, während die Strömungsabrisskante 213 an dem anderen Container ausgebildet ist.

Bei weiteren Varianten der Erfindung handelt es sich zumindest bei einem Teil der erfindungsgemäßen Fahrzeugkomponente nicht um eine Komponente des Wagenkastens des Fahrzeugs 101, sondern beispielsweise eine Komponente eines Fahrwerks des Fahrzeugs 101. So kann beispielsweise vorgesehen sein, dass die Strömungsabrisskante 207 an dem Wagenkasten des Fahrzeugs 101 ausgebildet ist, während die Strömungsabrisskante 213 an einer angrenzenden Komponente des Drehgestells 103 ausgebildet ist. Ebenso ist es möglich, dass die beiden Strömungsabrisskanten 207 und 213 an einer oder mehreren benachbarten Komponenten des Drehgestells 103 ausgebildet sind. Ebenso können die beiden Strömungsabrisskanten 207 und 213 an weiteren Anbauteilen des Fahrzeugs, wie Stromabnehmern etc., ausgebildet sein.

### Drittes Ausführungsbeispiel

Eine zweite vorteilhafte Ausführung der erfindungsgemäßen Fahrzeugkomponente 304 wird im Folgenden unter Bezugnahme auf die Figuren 1, 2 und 5 beschrieben. Die Fahrzeugkomponente 304 entspricht dabei in ihrer grundsätzlichen Gestaltung und Funktionsweise der Fahrzeugkomponente 104 des zweiten Ausführungsbeispiels aus den Figuren 1, 2 und 4, sodass hier lediglich auf die Unterschiede eingegangen werden soll. Insbesondere sind gleichartige Komponenten mit um den Wert 100 erhöhten Bezugszeichen versehen. Sofern nachfolgend nichts Anderweitiges ausgeführt wird, wird hinsichtlich der Merkmale, Funktionen und Vorteile dieser Komponenten auf die obigen Ausführungen im Zusammenhang mit dem zweiten Ausführungsbeispiel verwiesen.

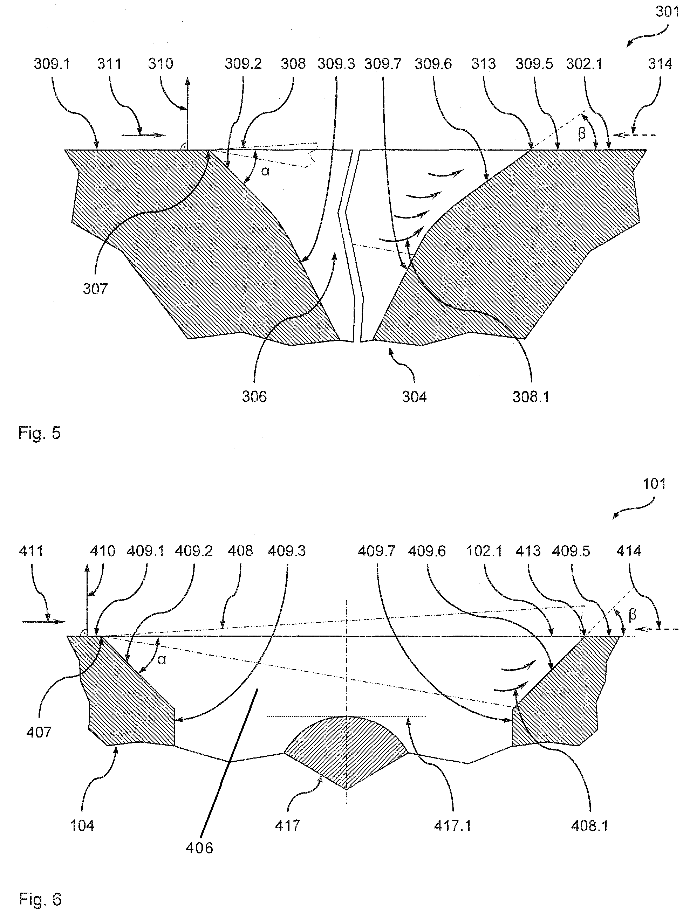

Die Figur 5 zeigt einen Schnitt durch den Rumpfabschnitt 304 (welcher grundsätzlich den Rumpfabschnitt 104 entspricht und die erfindungsgemäße Fahrzeugkomponente darstellt) im Bereich einer Ausnehmung 306 für einen Stromabnehmer (nicht dargestellt) im Dachbereich des Fahrzeugs 301.

Ein Unterschied zu der Ausführung aus Figur 4 besteht darin, dass die an die zweite Oberfläche 309.2 angrenzende dritte Oberfläche 309.3 sowie die an die sechste Oberfläche 309.6 angrenzende siebte Oberfläche 309.7 (anstelle von 90°) zum einen jeweils um einen Winkel von etwa 65° zur lokalen Hauptströmungsrichtung 211 bzw. 214 geneigt sind. Zum anderen ist der jeweilige Übergang zwischen der zweiten Oberfläche 309.2 und der dritten Oberfläche 309.3 sowie der Übergang zwischen der sechsten Oberfläche 309.6 und der siebten Oberfläche 309.7 konvex gekrümmt ausgebildet, sodass sich jeweils eine Kombination aus einer abschnittsweise geraden Schnittkontur und eine abschnittsweise gekrümmten Schnittkontur ergibt.

Diese Gestaltung hat den Vorteil, dass die Scherschicht 308, selbst wenn sie (wie in Figur 5 für den ersten Betriebsmodus gezeigt) nicht vollständig auf die sechste Oberfläche 309.6 bzw. die zweite Oberfläche 309.2 auftrifft, dennoch dank der Neigung der dritten Oberfläche 309.3 bzw. der siebten Oberfläche 309.7 und dank der Rundung der Übergänge ähnlich sanft aufgefangen wird. Demgemäß ist ohne nennenswerte Abstriche möglich, wie in Figur 5 dargestellt, die Längenabmessungen L21 bzw. L22 so zu wählen, dass lediglich etwa 70% der in die Ausnehmung 306 eindringenden Scherschicht 308 auf die sechste Oberfläche 309.6 bzw. die zweite Oberfläche 309.2 auftreffen.

Ein weiterer Unterschied zu der Ausführung aus Figur 4 besteht darin, dass der Neigungswinkel β = 35° und damit um 10° geringerer als der Neigungswinkel α = 45° gewählt wurde. Diese asymmetrische Gestaltung trägt dem Umstand Rechnung, dass der Stromabnehmer nahe an einem freien Ende eines vergleichsweise langen Fahrzeugs 301 vorgesehen ist.

Bildet dieses Fahrzeugende in dem ersten Betriebsmodus das vorlaufende Ende des Fahrzeugs, so ist in diesem Fall ist die saubere Ablösung der Strömung am vorlaufenden ersten Rand 307 der Ausnehmung 306 im Hinblick auf einen geringen Strömungswiderstand sowie eine geringe Geräuschemission ebenso von besonderer Bedeutung wie ein sanftes und schnelles Wiederanlegen der Strömung am nachlaufenden zweiten Rand der Ausnehmung, sodass im Bereich des zweiten Randes 313 ein möglichst geringer zweiter Neigungswinkel von Vorteil ist. In dem zweiten Betriebsmodus mit umgekehrter Fahrtrichtung befindet sich die Ausnehmung 306 dann am nachlaufenden Ende des Fahrzeugs 301, wo sich aufgrund der Länge des Fahrzeugs 301 bereits eine vergleichsweise breite Grenzschicht um das Fahrzeug 301 ausgebildet hat, welche die oben beschriebenen Probleme bei der Überströmung der Ausnehmung 306 reduziert, sodass die steilere Gestaltung der zweiten Oberfläche 309.2 beim Aufprall der Strömung eine geringere Rolle spielt.

### Viertes Ausführungsbeispiel

Eine dritte vorteilhafte Ausführung der erfindungsgemäßen Fahrzeugkomponente wird im Folgenden unter Bezugnahme auf die Figuren 1, 2 und 6 beschrieben. Die Fahrzeugkomponente 416, die eine Seitenwand des Kopfabschnitts 105 ist, entspricht dabei in ihrer grundsätzlichen Gestaltung und Funktionsweise der Fahrzeugkomponente 104 des zweiten Ausführungsbeispiels aus den Figuren 1, 2 und 4, sodass hier lediglich auf die Unterschiede eingegangen werden soll. Insbesondere sind gleichartige Komponenten mit um den Wert 200 erhöhten Bezugszeichen versehen. Sofern nachfolgend nichts Anderweitiges ausgeführt wird, wird hinsichtlich der Merkmale, Funktionen und Vorteile dieser Komponenten auf die obigen Ausführungen im Zusammenhang mit dem zweiten Ausführungsbeispiel verwiesen.

Die Figur 6 zeigt einen Schnitt durch die Seitenwand 416 des Kopfabschnitts 105 im Bereich einer Ausnehmung 406 für eine Griffstange 417 im Bereich einer Fahrertür (nicht dargestellt) des Fahrzeugs 101. Der einzige Unterschied zu der Gestaltung aus dem zweiten Ausführungsbeispiel besteht abgesehen von den Abmessungen der Ausnehmung 406 in der Tatsache, dass die Griffstange 417 in der Ausnehmung 406 derart versenkt ist, dass ihre außen liegende Tangentialebene 417.1 quer zur jeweiligen Hauptströmungsrichtung 411 bzw. 414 (in der Tiefenrichtung der Ausnehmung 406) auf einem tieferen bzw. weiter innen liegenden Niveau liegt als der jeweilige Übergang zwischen der zweiten Oberfläche 409.2 und der dritten Oberfläche 409.3 sowie der Übergang zwischen der sechsten Oberfläche 409.6 und der siebten Oberfläche 409.7.

Diese Gestaltung hat neben den oben beschriebenen Vorzügen der gefasten Gestaltung den Vorteil, dass die Griffstange 417 nicht mit der Scherschicht 418 interferiert, sodass durch die Griffstange 417 keine weitere Störung in die Strömung eingebracht wird, welche ein schnelles Wiederanlegen an die Außenhaut behindern bzw. verzögern könnte.

Die Ausnehmung muss quer zu der lokalen Hauptströmungsrichtung nicht notwendigerweise durch eine Wandung verschlossen sein. Bei bestimmten Ausführungsformen der Erfindung ist jedoch eine vierte Oberfläche vorgesehen, welche an die dritte Oberfläche anschließt und eine Begrenzung der Ausnehmung in einer Tiefenrichtung der Ausnehmung bildet.

### Fünftes Ausführungsbeispiel

Eine vierte vorteilhafte Ausführung der erfindungsgemäßen Fahrzeugkomponente wird im Folgenden unter Bezugnahme auf die Figuren 1, 2 und 7 beschrieben. Die Fahrzeugkomponente, die ein Übergang zwischen zwei Wagenkästen 104.1 und 104.2 des Rumpfanschnitts 104 ist, entspricht dabei in ihrer grundsätzlichen Gestaltung und Funktionsweise der Fahrzeugkomponente 104 des zweiten Ausführungsbeispiels aus den Figuren 1, 2 und 4, sodass hier lediglich auf die Unterschiede eingegangen werden soll. Insbesondere sind gleichartige Komponenten mit um den Wert 300 erhöhten Bezugszeichen versehen. Sofern nachfolgend nichts Anderweitiges ausgeführt wird, wird hinsichtlich der Merkmale, Funktionen und Vorteile dieser Komponenten auf die obigen Ausführungen im Zusammenhang mit dem zweiten Ausführungsbeispiel verwiesen.

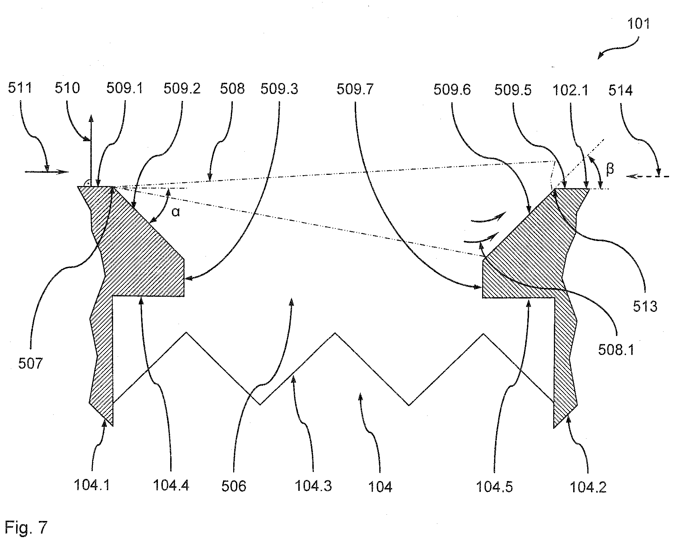

Die Figur 7 zeigt einen Schnitt durch den Übergang zwischen den Wagenkästen 104.1 und 104.2, die beispielsweise über einen schematisch durch die Kontur 104.3 angedeuteten Faltenbalg verbunden sind. Die erste bis dritte Oberfläche 509.1 bis 509.3 ist dabei an einem in Fahrzeuglängsrichtung weisenden ersten Vorsprung 104.4 des Wagenkastens 104.1 angeordnet, während die fünfte bis siebte Oberfläche 509.5 bis 509.7 ist an einem in entgegengesetzter Richtung in Fahrzeuglängsrichtung weisenden zweiten Vorsprung 104.5 des Wagenkastens 104.2 angeordnet ist.

Diese Gestaltung ermöglicht es, die oben beschriebenen Vorteile hinsichtlich der Reduktion des Strömungswiderstands und der Reduzierung der Schallemissionen auch im Bereich eines solchen Übergangs zwischen Wagenkästen zu realisieren. Die Ausbildung an einem Vorsprung des jeweiligen Wagenkastens prädestiniert diese Lösung im Übrigen auch für die Nachrüstung bereits bestehender Wagenkästen.

Die vorliegende Erfindung wurde vorstehend anhand von Beispielen spezifischer Fahrzeugkomponenten. Es versteht sich jedoch, dass die erfindungsgemäße Lösung auch für beliebige andere Komponenten zum Einsatz kommen kann, bei denen ein durch Fahrtwind bedingter Luftstrom eine Ausnehmung bzw. Lücke zwischen zwei Wandungen überstreicht.

Die vorliegende Erfindung wurde vorstehend ausschließlich für Beispiele von Fahrzeugen für Triebzüge beschrieben. Es versteht sich jedoch, dass die Erfindung auch im Zusammenhang mit anderen Schienenfahrzeugen zum Einsatz kommen kann. Weiterhin wurde die Erfindung ausschließlich im Zusammenhang mit Schienenfahrzeugen beschrieben. Es versteht sich jedoch, dass sie auch im Zusammenhang mit beliebigen anderen Fahrzeugen zur Reduzierung der Schallemissionen zum Einsatz kommen kann.

## Patentansprüche

1. Fahrzeugkomponente für ein Fahrzeug, insbesondere ein Schienenfahrzeug für den Hochgeschwindigkeitsverkehr, mit
- einer ersten Oberfläche (109.1; 103.3; 209.1; 309.1; 409.1; 509.1) und
- einer zweiten Oberfläche (109.2; 103.5; 209.2; 309.2; 409.2; 509.2), wobei
- die erste Oberfläche (109.1; 103.3; 209.1; 309.1; 409.1; 509.1) in einem ersten Betriebsmodus des Fahrzeugs mit einer ersten Fahrtrichtung einer fahrtwindbedingten Luftströmung mit einer lokalen Hauptströmungsrichtung (111; 211; 311; 411; 511) ausgesetzt ist,
- die erste Oberfläche (109.1; 103.3; 209.1; 309.1; 409.1; 509.1) im Bereich einer Ausnehmung (106; 206; 306; 406; 506) am Fahrzeug eine Strömungsabrisskante (107; 207; 307; 407; 507) ausbildet, an der sich die Luftströmung bei einer Nennbetriebsgeschwindigkeit des Fahrzeugs von der ersten Oberfläche (109.1; 103.3; 209.1; 309.1; 409.1; 509.1) ablöst,
- die Ausnehmung (106; 206; 306; 406; 506) durch eine in Richtung der lokalen Hauptströmungsrichtung (111; 211; 311; 411; 511) vorlaufende erste Wand (106.1) und eine nachlaufende zweite Wand (106.2) begrenzt ist,
- die Strömungsabrisskante (107; 207; 307; 407; 507) sich zumindest über einen Großteil einer Querabmessung der Ausnehmung (106; 206; 306; 406; 506) quer zu der lokalen Hauptströmungsrichtung (111; 211; 311; 411; 511) erstreckt,
- die zweite Oberfläche (109.2; 103.5; 209.2; 309.2; 409.2; 509.2) in Richtung der lokalen Hauptströmungsrichtung (111; 211; 311; 411; 511) an die Strömungsabrisskante (107; 207; 307; 407; 507) angrenzt und
- die zweite Oberfläche (109.2; 103.5; 209.2; 309.2; 409.2; 509.2) zumindest einen Teil der ersten Wand (106.1) bildet, und
- an die zweite Oberfläche (109.2; 103.5; 209.2; 309.2; 409.2; 509.2) in der lokalen Hauptströmungsrichtung eine dritte Oberfläche (109.3; 209.3; 309.3; 409.3; 509.3) anschließt,
**dadurch gekennzeichnet, dass**
- die zweite Oberfläche (109.2; 103.5; 209.2; 309.2; 409.2; 509.2) nach Art einer Fase um einen spitzen Neigungswinkel von 10° bis 60° zu der lokalen Hauptströmungsrichtung (111; 211; 311; 411; 511) geneigt angeordnet ist und
- die dritte Oberfläche (209.3; 309.3; 409.3; 509.3) zu der lokalen Hauptströmungsrichtung (111; 211; 311; 411; 511) stärker geneigt ist als die zweite Oberfläche (209.2; 309.2; 409.2; 509.2).

2. Fahrzeugkomponente nach Anspruch 1, **dadurch gekennzeichnet, dass**
- die erste Oberfläche (109.1; 103.3; 209.1; 309.1; 409.1; 509.1) im Bereich der Strömungsabrisskante (107; 207; 307; 407; 507) eine lokale erste Tangentialebene und eine lokale Flächennormale (110; 210; 310; 410; 510) definiert,
- die zweite Oberfläche (109.2; 103.5; 209.2; 309.2; 409.2; 509.2) im Bereich der Strömungsabrisskante (107; 207; 307; 407; 507) eine lokale zweite Tangentialebene definiert,
- die lokale Flächennormale (110; 210; 310; 410; 510) mit der lokalen Hauptströmungsrichtung (111; 211; 311; 411; 511) eine lokale Normalebene definiert und
- die lokale zweite Tangentialebene in der lokalen Normalebene um den Neigungswinkel zu der lokalen ersten Tangentialebene geneigt ist.

3. Fahrzeugkomponente nach Anspruch 1 oder 2, **dadurch gekennzeichnet, dass** der Neigungswinkel 30° bis 60° beträgt, weiter vorzugsweise 40° bis 50° beträgt, insbesondere im Wesentlichen 45° beträgt.

4. Fahrzeugkomponente nach Anspruch 2 oder 3, **dadurch gekennzeichnet, dass**
- die Ausnehmung (106; 206; 306; 406; 506) in der lokalen Normalebene zwischen der Strömungsabrisskante (107; 207; 307; 407; 507) und der zweiten Wand (106.2) eine maximale erste Längenabmessung in der lokalen Hauptströmungsrichtung (111; 211; 311; 411; 511) aufweist und
- sich die zweite Oberfläche (109.2; 103.5; 209.2; 309.2; 409.2; 509.2) in der lokalen Normalebene in der lokalen Hauptströmungsrichtung (111; 211; 311; 411; 511) über eine zweite Längenabmessung erstreckt, wobei
- die zweite Längenabmessung 1% bis 30% der ersten Längenabmessung beträgt, vorzugsweise 3% bis 15% der ersten Längenabmessung beträgt, weiter vorzugsweise 5% bis 10% der ersten Längenabmessung beträgt,
und/oder
- die zweite Längenabmessung so bemessen ist, dass wenigstens 50%, vorzugsweise wenigstens 70%, weiter vorzugsweise wenigstens 90%, insbesondere im Wesentlichen 100% des in die Ausnehmung (106; 206; 306; 406; 506) eindringenden Teils einer Scherschicht (108; 208; 308; 408; 508) auf die zweite Oberfläche (109.2; 103.5; 209.2; 309.2; 409.2; 509.2) auftreffen.

5. Fahrzeugkomponente nach einem der Ansprüche 2 bis 4, **dadurch gekennzeichnet, dass**
- die Ausnehmung (106; 206; 306; 406; 506) in der lokalen Normalebene ausgehend von der Strömungsabrisskante (107; 207; 307; 407; 507) senkrecht zu der lokalen Hauptströmungsrichtung (111; 211; 311; 411; 511) eine maximale erste Tiefenabmessung aufweist und
- sich die zweite Oberfläche (109.2; 103.5; 209.2; 309.2; 409.2; 509.2) in der lokalen Normalebene ausgehend von der Strömungsabrisskante (107; 207; 307; 407; 507) senkrecht zu der lokalen Hauptströmungsrichtung (111; 211; 311; 411; 511) über eine zweite Tiefenabmessung erstreckt, die 1% bis 40% der ersten Tiefenabmessung beträgt, vorzugsweise 5% bis 30% der ersten Tiefenabmessung beträgt, weiter vorzugsweise 10% bis 20% der ersten Tiefenabmessung beträgt.

6. Fahrzeugkomponente nach einem der Ansprüche 2 bis 4, **dadurch gekennzeichnet, dass**
- die zweite Oberfläche (109.2; 103.5; 209.2; 309.2; 409.2; 509.2) in der lokalen Normalebene zumindest abschnittsweise eine im Wesentlichen geradlinige Schnittkontur aufweist
und/oder
- die zweite Oberfläche (309.2) in der lokalen Normalebene zumindest abschnittsweise eine gekrümmte Schnittkontur aufweist.

7. Fahrzeugkomponente nach einem der Ansprüche 2 bis 6, **dadurch gekennzeichnet, dass**
- die Strömungsabrisskante (107; 207; 307; 407; 507) scharfkantig ausgeführt ist, wobei der Krümmungsradius der ersten Oberfläche 109.1; 103.3; 209.1; 309.1; 409.1; 509.1) im Bereich der Strömungsabrisskante (107; 207; 307; 407; 507) in der lokalen Normalebene insbesondere höchstens 20 mm beträgt, vorzugsweise höchstens 10 mm beträgt, weiter vorzugsweise höchstens 5 mm beträgt, weiter vorzugsweise höchstens 2 mm beträgt,
und/oder
- die Strömungsabrisskante (107; 207; 307; 407; 507) sich über wenigstens 50% der Querabmessung der Ausnehmung (106; 206; 306; 406; 506), vorzugsweise über wenigstens 70% der Querabmessung der Ausnehmung (106; 206; 306; 406; 506), weiter vorzugsweise über wenigstens 90% der Querabmessung der Ausnehmung (106; 206; 306; 406; 506), insbesondere über im Wesentlichen 100% der Querabmessung der Ausnehmung (106; 206; 306; 406; 506), erstreckt

8. Fahrzeugkomponente nach einem der vorhergehenden Ansprüche, **dadurch gekennzeichnet, dass**
- die dritte Oberfläche (308.3) einen sanften, zumindest abschnittsweise gekrümmten und/oder zumindest abschnittsweise geradlinigen Übergang zu der zweiten Oberfläche (308.2) aufweist
und/oder
- die dritte Oberfläche (109.3; 209.3; 309.3; 409.3; 509.3) einen zumindest abschnittsweise konvexen Übergang zu der zweiten Oberfläche (109.2; 103.5; 209.2; 309.2; 409.2; 509.2) aufweist
und/oder
- eine vierte Oberfläche (109.4; 209.4; 104.3) vorgesehen ist, die an die dritte Oberfläche (109.3; 209.3) anschließt und eine Begrenzung der Ausnehmung in einer Tiefenrichtung der Ausnehmung (106; 206; 506) bildet.

9. Fahrzeugkomponente nach einem der vorhergehenden Ansprüche, **dadurch gekennzeichnet, dass**
- Im Bereich der zweiten Wand (106.2) eine fünfte Oberfläche (109.5; 103.3; 209.5; 309.5; 409.5; 509.5) und einer sechste Oberfläche (109.6; 103.4; 209.6; 309.6; 409.6; 509.6) vorgesehen ist, wobei
- die fünfte Oberfläche (109.5; 103.3; 209.5; 309.5; 409.5; 509.5) derart ausgebildet ist, dass sie in einem zweiten Betriebsmodus des Fahrzeugs mit einer zur ersten Fahrtrichtung entgegengesetzten zweiten Fahrtrichtung hinsichtlich Gestaltung und Funktion der ersten Oberfläche (109.1; 103.3; 209.1; 309.1; 409.1; 509.1) entspricht, und
- die sechste Oberfläche (109.6; 103.4; 209.6; 309.6; 409.6; 509.6) derart ausgebildet ist, dass sie in dem zweiten Betriebsmodus hinsichtlich Gestaltung und Funktion der zweiten Oberfläche (109.2; 103.5; 209.2; 309.2; 409.2; 509.2) entspricht.

10. Fahrzeugkomponente nach Anspruch 9, **dadurch gekennzeichnet, dass**
- der Neigungswinkel zwischen der ersten Oberfläche (109.1; 103.3; 209.1; 309.1; 409.1; 509.1) und der zweiten Oberfläche (109.2; 103.5; 209.2; 309.2; 409.2; 509.2) ein erster Neigungswinkel ist und
- die sechste Oberfläche (109.6; 103.4; 209.6; 309.6; 409.6; 509.6) nach Art einer Fase um einen spitzen zweiten Neigungswinkel zu der fünften Oberfläche (109.5; 103.3; 209.5; 309.5; 409.5; 509.5) geneigt angeordnet ist, wobei
- der zweite Neigungswinkel insbesondere 10° bis 80° beträgt, vorzugsweise 30° bis 60° beträgt, weiter vorzugsweise 40° bis 50° beträgt, insbesondere im Wesentlichen 45° beträgt,
und/oder
- der zweite Neigungswinkel insbesondere kleiner ist als der erste Neigungswinkel, der zweite Neigungswinkel vorzugsweise um 5° bis 55° kleiner ist als der erste Neigungswinkel.

11. Fahrzeugkomponente nach einem der vorhergehenden Ansprüche, **dadurch gekennzeichnet, dass**
- die Ausnehmung ein Fahrwerksausschnitt (106) eines Wagenkastens (102) des Fahrzeugs ist
oder
- die Ausnehmung eine Griffmulde (406) in einer Seitenwandung eines Wagenkastens (102) des Fahrzeugs ist, wobei in der Griffmulde insbesondere eine Handstange (417) in einer versenkten Anordnung vorgesehen ist,
oder
- die Ausnehmung (206; 306) eine Vertiefung in einem Dachbereich eines Wagenkastens (102) des Fahrzeugs ist, wobei die Vertiefung insbesondere zur Aufnahme einer Komponente einer Stromversorgungseinrichtung des Fahrzeugs, insbesondere eines Stromabnehmers, vorgesehen ist,

12. Fahrzeugkomponente nach einem der Ansprüche 1 bis 11, **dadurch gekennzeichnet, dass**
- die Ausnehmung (506) ein Einschnitt in einer Außenhaut (102.1) des Fahrzeugs an einem Übergang (516) zwischen zwei Wagenkästen (104.1,1 104.2) des Fahrzeugs ist, wobei
- die erste Oberfläche (509.1) und die zweite Oberfläche (509.2) insbesondere an einem in einer Fahrzeuglängsrichtung weisenden Vorsprung (104.4) eines Wagenkastens (104.1) ausgebildet sind.

13. Fahrzeugkomponente nach einem der Ansprüche 1 bis 11, **dadurch gekennzeichnet, dass**
- die Ausnehmung (206) eine Lücke zwischen zwei Anbauelementen, insbesondere zwei Dachcontainern oder zwei Unterflurcontainern, an wenigstens einem Wagenkasten (102) des Fahrzeugs ist
und/oder
- die Ausnehmung (206) eine Lücke zwischen einem Wagenkasten (102) des Fahrzeugs und einem Fahrwerk (103) des Fahrzeugs ist.

14. Fahrzeugkomponente nach einem der Ansprüche 1 bis 11, **dadurch gekennzeichnet, dass** sie ein Fahrwerk (103) des Fahrzeugs ist.

15. Fahrzeug mit einer Fahrzeugkomponente nach einem der vorhergehenden Ansprüche, wobei es insbesondere ein Fahrzeug für den Hochgeschwindigkeitsverkehr mit einer Nennbetriebsgeschwindigkeit oberhalb von 250 km/h, insbesondere oberhalb von 300 km/h, insbesondere von 320 km/h bis 390 km/h ist.

## Claims

1. Vehicle component for a vehicle, in particular a rail vehicle for high speed traffic, comprising:
- a first surface (109.1; 103.3; 209.1; 309.1; 409.1; 509.1) and
- a second surface (109.2; 103.5; 209.2; 309.2; 409.2; 509.2), wherein
- said first surface (109.1; 103.3; 209.1; 309.1; 409.1; 509.1), in a first operating mode of said vehicle with a first travel direction, is exposed to a relative wind induced air flow having a local main flow direction (111; 211; 311; 411; 511),
- said first surface (109.1; 103.3; 209.1; 309.1; 409.1; 509.1), in the region of a recess (106; 206; 306; 406; 506) at said vehicle, forms a flow separation edge (107; 207; 307; 407; 507) at which said air flow, at a nominal operating speed of said vehicle, separates from said first surface (109.1; 103.3; 209.1; 309.1; 409.1; 509.1),
- said recess (106; 206; 306; 406; 506) is confined by a first wall (106.1) leading in said local main flow direction (111; 211; 311; 411; 511) and a trailing second wall (106.2),
- said flow separation edge (107; 207; 307; 407; 507) extends at least over a majority of a transverse dimension of said recess (106; 206; 306; 406; 506) transverse to said local main flow direction (111; 211; 311; 411; 511),
- said second surface (109.2; 103.5; 209.2; 309.2; 409.2; 509.2), in said local main flow direction (111; 211; 311; 411; 511), is located adjacent to said flow separation edge (107; 207; 307; 407; 507), and
- said second surface (109.2; 103.5; 209.2; 309.2; 409.2; 509.2) forms at least a part of said first wall (106.1), and
- a third surface (109.3; 209.3; 309.3; 409.3; 509.3), in said local main flow direction, is located adjacent to said second surface (109.2; 103.5; 209.2; 309.2; 409.2; 509.2)
**characterised in that**
- said second surface (109.2; 103.5; 209.2; 309.2; 409.2; 509.2) is arranged to be inclined in the manner of a chamfer about an acute angle of inclination of 10° to 60° relative to said local main flow direction (111; 211; 311; 411; 511) and
- said third surface (209.3; 309.3; 409.3; 509.3) is arranged at a stronger inclination relative to said local main flow direction (111; 211; 311; 411; 511) than said second surface (209.2; 309.2; 409.2; 509.2).

2. Vehicle component according to Claim 1, **characterised in that**
- said first surface (109.1; 103.3; 209.1; 309.1; 409.1; 509.1), in the region of said flow separation edge (107; 207; 307; 407; 507), defines a local first tangent plane and a local surface normal (110; 210; 310; 410; 510),
- said second surface (109.2; 103.5; 209.2; 309.2; 409.2; 509.2), in the region of said flow separation edge (107; 207; 307; 407; 507), defines a local second tangent plane,
- said local surface normal (110; 210; 310; 410; 510) together with said local main flow direction (111; 211; 311; 411; 511) defines a local normal plane, and
- said local second tangent plane, in said local normal plane, is inclined with respect to said local first tangent plane about said angle of inclination.

3. Vehicle component according to any one of Claim 1 or 2, **characterised in that** said angle of inclination is 30° to 60°, more preferably 40° to 50°, in particular substantially 45°.

4. Vehicle component according to Claim 2 or 3, **characterised in that**
- said recess (106; 206; 306; 406; 506), in said local normal plane and in said local main flow direction (111; 211; 311; 411; 511), has a maximum first longitudinal dimension between said flow separation edge (107; 207; 307; 407; 507) and said second wall (106.2) and
- said second surface (109.2; 103.5; 209.2; 309.2; 409.2; 509.2), in said local normal plane and in said local main flow direction (111; 211; 311; 411; 511), extends over a second longitudinal dimension, wherein
- said second longitudinal dimension is 1% to 30% of said first longitudinal dimension, preferably 3% to 15% of said first longitudinal dimension, more preferably 5% to 10% of said first longitudinal dimension,
and/or
- said second longitudinal dimension is selected such that at least 50%, preferably at least 70%, more preferably at least 90%, in particular substantially 100% of the part of a shear layer (108; 208; 308; 408; 508) penetrating into said recess (106; 206; 306; 406; 506) impinges on said second surface (109.2; 103.5; 209.2; 309.2; 409.2; 509.2).

5. Vehicle component according to any one of Claims 2 to 4, **characterised in that**
- said recess (106; 206; 306; 406; 506), in said local normal plane and starting from said flow separation edge (107; 207; 307; 407; 507), has a maximum first depth dimension perpendicular to said local main flow direction (111; 211; 311; 411; 511) and
- said second surface (109.2; 103.5; 209.2; 309.2; 409.2; 509.2), in said local normal plane, starting from said flow separation edge (107; 207; 307; 407; 507) and in a direction perpendicular to said local main flow direction (111; 211; 311; 411; 511), extends over a second depth dimension, which is 1% to 40% of said first depth dimension, preferably 5% to 30% of said first depth dimension, more preferably 10% to 20% of said first depth dimension.

6. Vehicle component according to any one of Claims 2 to 4, **characterised in that**
- said second surface (109.2; 103.5; 209.2; 309.2; 409.2; 509.2) at least section-wise has a substantially straight sectional contour in said local normal plane
and/or
- said second surface (309.2) at least section-wise has a curved sectional contour in said local normal plane.

7. Vehicle component according to any one of Claims 2 to 6, **characterised in that**
- said flow separation edge (107; 207; 307; 407; 507) is sharp edged, wherein the radius of curvature of said first surface 109.1; 103.3; 209.1; 309.1; 409.1; 509.1), in the region of said first separation edge (107; 207; 307; 407; 507) in said local normal plane, in particular, has a maximum of 20 mm, preferably a maximum of 10 mm, more preferably a maximum of 5 mm, more preferably a maximum of 2 mm,
and/or
- said flow separation edge (107; 207; 307; 407; 507) extends over at least 50% of said transverse dimension of said recess (106; 206; 306; 406; 506), preferably over at least 70% of the transverse dimension of said recess (106; 206; 306; 406; 506), more preferably over at least 90% of the transverse dimension of said recess (106; 206; 306; 406; 506), in particular over substantially 100% of the transverse dimension of said recess (106; 206; 306; 406; 506).

8. Vehicle component according to any one of the preceding claims, **characterised in that**,
- said third surface (308.3) has a smooth, at least section-wise curved and/or at least section-wise straight transition to said second surface (308.2)
and/or
- said third surface (109.3; 209.3; 309.3; 409.3; 509.3) has an at least section-wise convex transition to said second surface (109.2; 103.5; 209.2; 309.2; 409.2; 509.2) and/or
- a fourth surface (109.4; 209.4; 104.3) is provided which is located adjacent to said third surface (109.3; 209.3) and forms a limitation of said recess in a depth direction of said recess (106; 206; 506).

9. Vehicle component according to any one of the preceding claims, **characterised in that**,
- in the region of said second wall (106.2), a fifth surface (109.5; 103.3; 209.5; 309.5; 409.5; 509.5) and a sixth surface (109.6; 103.4; 209.6; 309.6; 409.6; 509.6) are provided, wherein
- said fifth surface (109.5; 103.3; 209.5; 309.5; 409.5; 509.5) is formed such that, in a second operating mode of said vehicle in a second travel direction which runs counter to said first travel direction, it corresponds to said first surface (109.1; 103.3; 209.1; 309.1; 409.1; 509.1) in terms of shape and function and
- said sixth surface (109.6; 103.4; 209.6; 309.6; 409.6; 509.6) is formed such that, in said second operating mode, it corresponds to said second surface (109.2; 103.5; 209.2; 309.2; 409.2; 509.2) in terms of shape and function.

10. Vehicle component according to Claim 9, **characterised in that**
- said angle of inclination between said first surface (109.1; 103.3; 209.1; 309.1; 409.1; 509.1) and said second surface (109.2; 103.5; 209.2; 309.2; 409.2; 509.2) is a first angle of inclination and
- said sixth surface (109.6; 103.4; 209.6; 309.6; 409.6; 509.6) is arranged inclined to said fifth surface (109.5; 103.3; 209.5; 309.5; 409.5; 509.5) in the manner of a chamfer about an acute second angle of inclination, wherein
- said second angle of inclination, in particular, is 10° to 80°, preferably 30° to 60°, more preferably 40° to 50°, in particular substantially 45°,
and/or
- said second angle of inclination, in particular, is smaller than said first angle of inclination, said second angle of inclination preferably being 5° to 55° smaller than said first angle of inclination.

11. Vehicle component according to any one of the preceding claims, **characterised in that**
- said recess is a running gear cutout (106) of a wagon body (102) of said vehicle or
- said recess is a handle cavity (406) in a side wall of a wagon body (102) of said vehicle, wherein, in particular, a hand rod (417) is provided in said handle cavity in a retracted arrangement,
or
- said recess (206; 306) is an indentation in a roof area of a wagon body (102) of said vehicle, wherein said indentation, in particular, is configured to receive a component of a power supply unit of said vehicle, in particular a pantograph.

12. Vehicle component according to any one of Claims 1 to 11, **characterised in that**
- said recess (506) is a notch in an outer skin (102.1) of said vehicle at a transition (516) between two wagon bodies (104.1,1 104.2) of said vehicle, wherein
- said first surface (509.1) and said second surface (509.2), in particular, are formed on a protrusion (104.4) of a wagon body (104.1) in a longitudinal direction of said vehicle.

13. Vehicle component according to any one of Claims 1 to 11, **characterised in that**
- said recess (206) is a gap between two add-on elements, in particular between two roof containers or two underfloor containers, on at least one wagon body (102) of said vehicle
and/or
- said recess (206) is a gap between a wagon body (102) of said vehicle and a running gear (103) of said vehicle.

14. Vehicle component according to any one of Claims 1 to 11, **characterised in that** it is a running gear (103) of said vehicle.

15. Vehicle with a vehicle component according to any one of the preceding claims, wherein it is, in particular, a vehicle for high speed traffic with a nominal operating speed above 250 km/h, in particular above 300 km/h, in particular from 320 km/h to 390 km/h.

## Revendications

1. Composant de véhicule pour un véhicule, notamment un véhicule ferroviaire pour le trafic à grande vitesse, comprenant:
- une première surface (109.1; 103.3; 209.1; 309.1; 409.1; 509.1) et
- une seconde surface (109.2; 103.5; 209.2; 309.2; 409.2; 509.2), dans lequel
- la première surface (109.1; 103.3; 209.1; 309.1; 409.1; 509.1), dans un premier mode de fonctionnement du véhicule avec une première direction de voyage, est exposée à un flux d'air induit par le vent de circulation ayant une direction d'écoulement principale locale (111; 211; 311; 411; 511),
- la première surface (109.1; 103.3; 209.1; 309.1; 409.1; 509.1), dans la zone d'un évidement (106; 206; 306; 406; 506) sur le véhicule, forme un bord de séparation d'écoulement (107; 207; 307; 407; 507), sur lequel le flux d'air à une vitesse nominale de fonctionnement du véhicule se sépare de la première surface (109.1; 103.3; 209.1; 309.1; 409.1; 509.1),
- l'évidement (106; 206; 306; 406; 506) est limité, par une première paroi (106.1) située, dans le sens de la direction d'écoulement principale locale (111; 211; 311; 411; 511), en avant et par une seconde paroi (106.2) arrière,
- le bord de séparation d'écoulement (107; 207; 307; 407; 507) se prolonge au moins sur une partie majeure d'une dimension transversale de l'évidement (106; 206; 306; 406; 506) transversalement à la direction d'écoulement principale locale (111; 211; 311; 411; 511),
- la seconde surface (109.2; 103.5; 209.2; 309.2; 409.2; 509.2) est adjacente au bord de séparation d'écoulement (107; 207; 307; 407; 507) dans le sens de la direction d'écoulement principale locale (111 ; 211; 311; 411; 511), et
- la seconde surface (109.2; 103.5; 209.2; 309.2; 409.2; 509.2) forme au moins une partie de la première paroi (106.1),
- une troisième surface (109.3; 209.3; 309.3; 409.3; 509.3), dans la direction d'écoulement principale locale (111; 211; 311; 411; 511), est située adjacente à la seconde surface (109.2; 103.5; 209.2; 309.2; 409.2; 509.2),
**caractérisé en ce que**
- la seconde surface (109.2; 103.5; 209.2; 309.2; 409.2; 509.2) est arrangée à être inclinée à la manière d'un chanfrein selon un angle aigu d'inclinaison de 10° à 60° par rapport à la direction d'écoulement principale locale (111; 211; 311; 411; 511) et
- la troisième surface (109.3; 209.3; 309.3; 409.3; 509.3) est plus fortement inclinée par rapport à la direction d'écoulement principale locale (111; 211; 311; 411; 511) que la seconde surface (109.2; 103.5; 209.2; 309.2; 409.2; 509.2).

2. Composant de véhicule selon la revendication 1, **caractérisé en ce que**
- la première surface (109.1; 103.3; 209.1; 309.1; 409.1; 509.1), dans la région du bord de séparation d'écoulement (107; 207; 307; 407; 507), définit un premier plan tangentiel local et une normale de surface locale (110; 210; 310; 410; 510),
- la seconde surface (109.2; 103.5; 209.2; 309.2; 409.2; 509.2) dans la région du bord de séparation d'écoulement (107; 207; 307; 407; 507) définit un second plan tangentiel local,
- la normale de surface locale (110; 210; 310; 410; 510) avec la direction d'écoulement principal local (111; 211; 311; 411; 511) définit un plan normal local, et
- le second plan tangentiel local, dans le plan normal local, est incliné par l'angle d'inclinaison par rapport au premier plan tangentiel local.

3. Composant de véhicule selon la revendication 1 ou 2, **caractérisé en ce que** l'angle d'inclinaison est 35° à 60°, de préférence 40° à 50°, en particulier sensiblement 45°.

4. Composant de véhicule selon la revendication 2 ou 3, **caractérisé en ce que**
- l'évidement (106; 206; 306; 406; 506), dans le plan normal local et dans la direction d'écoulement principale locale (111; 211; 311; 411; 511), entre le bord de séparation d'écoulement (107; 207; 307; 407; 507) et la seconde surface (106.2) a une première dimension de longueur maximale, et
- la seconde surface (109.2; 103.5; 209.2; 309.2; 409.2; 509.2) dans le plan normal local at dans la direction d'écoulement principale locale (111 ; 211; 311; 411; 511), se prolonge sur une seconde dimension de longueur, dans lequel
- la seconde dimension de longueur est de 1% à 30% de la première dimension de longueur, de préférence de 3% à 15% de la première dimension de longueur, plus préférablement de 5% à 10% de la première dimension en longueur,
et/ou
- la seconde dimension de longueur est dimensionnée de telle sorte qu'au moins 50%, de préférence au moins 70%, plus préférablement au moins 90%, en particulier sensiblement 100% d'une partie d'une couche de cisaillement (108; 208; 308; 408; 508) qui pénètre dans l'évidement (106; 206; 306; 406; 506) sont incidents sur la seconde surface (109.2; 103.5; 209.2; 309.2; 409.2; 509.2).

5. Composant de véhicule selon l'une quelconque des revendications 2 à 4, **caractérisé en ce que**
- l'évidement (106; 206; 306; 406; 506), dans le plan normal local, à partir du bord de séparation d'écoulement (107; 207; 307; 407; 507), a une première dimension de profondeur maximale perpendiculaire à la direction principale d'écoulement (111; 211; 311; 411; 511), et
- la seconde surface (109.2; 103.5; 209.2; 309.2; 409.2; 509.2), dans le plan normal local, à partir du bord de séparation d'écoulement (107; 207; 307 ; 407; 507), se prolonge sur une seconde dimension de profondeur perpendiculaire à la direction d'écoulement principale locale (111; 211; 311; 411; 511), qui est de 1% à 40% de la première dimension en profondeur, de préférence de 5% à 30% de la première dimension en profondeur, plus préférablement de 10% à 20% de la première dimension en profondeur.

6. Composant de véhicule selon l'une quelconque des revendications 2 à 4, **caractérisé en ce que**
- la seconde surface (109.2; 103.5; 209.2; 309.2; 409.2; 509.2), dans le plan normal local, présente, au moins par tronçons, un contour de section transversale sensiblement rectiligne
et/ou
- la seconde surface (309.2), dans le plan normal local, présente, au moins par tronçons, un contour de section transversale incurvée.

7. Composant de véhicule selon l'une quelconque des revendications 2 à 6, **caractérisé en ce que**
- le bord de séparation d'écoulement (107; 207; 307; 407; 507) est réalisé comme arête vive, dans lequel le rayon de courbure de la première surface 109.1; 103.3; 209.1; 309.1; 409.1; 509.1), dans la région du bord de séparation d'écoulement (107; 207; 307; 407; 507) dans le plan normal local, est en particulier au plus 20 mm, de préférence au plus 10 mm, plus préférablement au plus 5 mm, plus préférablement au plus 2 mm,
et/ou
- le bord de séparation d'écoulement (107; 207; 307; 407; 507) se prolonge sur au moins 50% de la dimension transversale de l'évidement (106; 206; 306; 406; 506), de préférence sur au moins 70% de la dimension transversale de l'évidement (106; 206; 306; 406; 506), de préférence sur au moins 90% de la dimension transversale de l'évidement (106; 206; 306; 406; 506), en particulier sur sensiblement 100% de la dimension transversale de l'évidement (106; 206; 306; 406; 508).

8. Composant de véhicule selon l'une quelconque des revendications précédentes, **caractérisé en ce que**
- la troisième surface (308.3) a une transition douce, au moins en partie incurvée
et/ou au moins partiellement rectiligne vers la seconde surface (308.2)
et/ou
- la troisième surface (109.3; 209.3; 309.3; 409.3; 509.3) comprend une transition au moins partiellement convexe vers la deuxième surface (109.2; 103.5; 209.2; 309.2; 409.2; 509.2)
et/ou
- une quatrième surface (109.4; 209.4; 104.3) est prévu, qui est adjacente à la troisième surface (109.3, 209.3) et qui limite l'évidement dans une direction de profondeur de l'évidement (106; 206; 506).

9. Composant de véhicule selon l'une quelconque des revendications précédentes, **caractérisé en ce que**
- dans la zone de la seconde paroi (106.2) une cinquième surface (109.5; 103.3; 209.5; 309.5; 409.5; 509.5) et une sixième surface (109.6; 103.4; 209.6; 309.6; 409.6; 509.6) est prévu, dans lequel
- la cinquième surface (109.5; 103.3; 209.5; 309.5; 409.5; 509.5) est conçue de telle sorte que, dans un second mode de fonctionnement du véhicule avec une deuxième direction de voyage opposée à la première direction de voyage, elle correspond à la structure et au fonctionnement de la première surface (109.1; 103.3; 209.1; 309.1; 409.1; 509.1)
- la sixième surface (109.6; 103.4; 209.6; 309.6; 409.6; 509.6) est conçu de telle sorte que, dans le deuxième mode de fonctionnement, elle correspond à la structure et au fonctionnement de la deuxième surface (109.2; 103.5; 209.2; 309.2; 409.2; 509.2).

10. Composant de véhicule selon la revendication 9, **caractérisé en ce que**
- l'angle d'inclinaison entre la première surface (109.1; 103.3; 209.1; 309.1; 409.1; 509.1) et la deuxième surface (109.2; 103.5; 209.2; 309.2; 409.2; 509.2) est un premier angle d'inclinaison et
- la sixième surface (109.6; 103.4; 209.6; 309.6; 409.6; 509.6) est disposé à être incliné à la manière d'un chanfrein à un second angle d'inclinaison aigu par rapport à la cinquième surface (109.5; 103.3; 209.5; 309.5; 409.5; 509.5), dans lequel
- le second angle d'inclinaison est en particulier de 10° à 80°, de préférence 30° à 60°, plus préférablement de 40° à 50°, en particulier sensiblement 45°,
et/ou
- le deuxième angle d'inclinaison, en particulier est inférieur au premier angle d'inclinaison, le second angle d'inclinaison est de préférence de 5° à 55° plus petit que le premier angle d'inclinaison.

11. Composant de véhicule selon l'une quelconque des revendications précédentes, **caractérisé en ce que**
- l'évidement est un segment de bogie (106) d'une carrosserie (102) du véhicule ou
- l'évidement présente une poignée encastrée (406) dans une paroi latérale d'une carrosserie (102) du véhicule, dans lequel dans la poignée encastrée est prévue dans un agencement en retrait, en particulier, une tige manuelle (417)
ou
- l'évidement (206; 306) est un évidement dans une partie de toit d'une carrosserie (102) du véhicule, dans lequel l'évidement est prévu, en particulier pour recevoir un composant d'un dispositif d'alimentation électrique du véhicule, en particulier un collecteur de courant.

12. Composant de véhicule selon l'une quelconque des revendications 1 à 11, **caractérisé en ce que**
- l'évidement (506) est une encoche dans une peau extérieure (102.1) du véhicule à une jonction (516) entre deux caisses de voiture (104.1,1 104.2) du véhicule, dans lequel
- la première surface (509.1) et la deuxième surface (509.2) sont formées, en particulier sur une face d'une saillie (104.4) dans la direction longitudinale du véhicule d'une caisse de voiture (104.1).

13. Composant de véhicule selon l'une quelconque des revendications 1 à 11, **caractérisé en ce que**
- l'évidement (206) est un interstice entre deux éléments de montage, en particulier deux conteneurs de toit ou deux conteneurs sous plancher, sur au moins une caisse de voiture (102) du véhicule
et/ou
- l'évidement (206) est un interstice entre une caisse de voiture (102) du véhicule et un train de roulement (103) du véhicule.

14. Composant de véhicule selon l'une quelconque des revendications 1 à 11, **caractérisé en ce qu'**il est un train de roulement (103) du véhicule.

15. Véhicule avec un composant de véhicule selon l'une quelconque des revendications précédentes, **caractérisé en ce qu'**il est en particulier un véhicule pour le trafic à grande vitesse avec une vitesse de fonctionnement nominal de plus de 250 km/h, notamment supérieure à 300 km/h, en particulier de 320 km/h à 390 km/h.
